(19) Europäisches Patentamt / European Patent Office / Office européen des brevets

(11) **EP 4 174 204 A1**

(12) **EUROPEAN PATENT APPLICATION**
published in accordance with Art. 153(4) EPC

(43) Date of publication:
**03.05.2023 Bulletin 2023/18**

(21) Application number: **21829952.7**

(22) Date of filing: **22.04.2021**

(51) International Patent Classification (IPC):
*C22C 38/00* (2006.01)     *B23K 35/30* (2006.01)
*C22C 38/58* (2006.01)     *E04H 9/02* (2006.01)

(52) Cooperative Patent Classification (CPC):
**B23K 35/30; C22C 38/00; C22C 38/58; E04H 9/02**

(86) International application number:
**PCT/JP2021/016266**

(87) International publication number:
**WO 2021/261067 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020 JP 2020108313**
**18.12.2020 JP 2020209933**

(71) Applicants:
• **National Institute for Materials Science**
**Tsukuba-shi, Ibaraki 305-0047 (JP)**
• **Takenaka Corporation**
**Osaka-shi, Osaka 541-0053 (JP)**

(72) Inventors:
• **SAWAGUCHI, Takahiro**
**Tsukuba-shi, Ibaraki 305-0047 (JP)**

• **NAKAMURA, Terumi**
**Tsukuba-shi, Ibaraki 305-0047 (JP)**
• **ARAKANE, Goro**
**Tsukuba-shi, Ibaraki 305-0047 (JP)**
• **TAKAMORI, Susumu**
**Tsukuba-shi, Ibaraki 305-0047 (JP)**
• **YOSHINAKA, Fumiyoshi**
**Tsukuba-shi, Ibaraki 305-0047 (JP)**
• **KUSHIBE, Atsumichi**
**Inzai-shi, Chiba 270-1395 (JP)**
• **INOUE, Yasuhiko**
**Inzai-shi, Chiba 270-1395 (JP)**
• **MOTOMURA, Susumu**
**Inzai-shi, Chiba 270-1395 (JP)**
• **OSUGA, Fumiaki**
**Inzai-shi, Chiba 270-1395 (JP)**

(74) Representative: **Klang, Alexander H.**
**Wagner & Geyer Partnerschaft mbB**
**Patent- und Rechtsanwälte**
**Gewürzmühlstrasse 5**
**80538 München (DE)**

(54) **WELDED STRUCTURE AND FE-MN-CR-NI-SI-BASED ALLOY**

(57)     The present invention provides a welded structure, such as a seismic damper assembled using a welding method, in which even the welded portion exhibits an excellent fatigue characteristic that is equivalent to that of the steel material of the base material. The welded structure according to one embodiment of the present invention is a welded structure having a structure in which a plurality of steel materials is welded with a welding material, said steel materials being a base material, wherein a weld metal has a component composition in an FA solidification mode, the base material, a weld heat-affected zone (HAZ), and the weld metal have a metal structure, before cyclic elastic-plastic deformation, including 85 vol% or more and less than 100 vol% of a $\gamma$ austenite phase (FCC structure), 0 vol% or more and less than 14.5 vol% of a total of a $\delta$ ferrite phase (BCC structure or BCT structure) and an initial $\varepsilon$ martensite phase, and 0 vol% or more and less than 0.5 vol% of a total of inevitable precipitates/inclusions such as a carbide, a nitride, an oxide, and a silicide, the base material, the weld heat-affected zone, and the weld metal have a metal structure, immediately before fatigue fracture or at a time of fatigue fracture, including 10 vol% or more and less than 90 vol% of a deformation-induced $\varepsilon$ martensite phase (HCP structure), 0 vol% or more and less than 12 vol% of a deformation-induced $\alpha'$ martensite phase (BCC structure or BCT structure), 10 vol% or more and 90 vol% or less of a remaining $\gamma$ austenite phase, 0 vol% or more and less than 14.5 vol% of a total of a $\delta$ ferrite phase and an initial $\varepsilon$ martensite phase, and 0 vol% or more and less than 0.5 vol% of a total of inevitable precipitates/inclusions such as a carbide, a nitride, an oxide, and a

**(Cont. next page)**

silicide, and when the welded structure is subjected to cyclic elastic-plastic deformation, a microstructure changes from the metal structure before cyclic elastic-plastic deformation to the metal structure immediately before fatigue fracture or at a time of fatigue fracture, and in response to sequential cyclic elastic-plastic deformation, deformation-induced martensitic transformation from a γ austenite phase to an ε martensite phase and a reverse transformation from an ε martensite phase to a γ austenite phase occur alternately and repeatedly and a volume percentage of a deformation-induced ε martensite phase sequentially increases.

Fig. 2

## Description

Technical Field

The present invention relates to a welded structure and a Fe-Mn-Cr-Ni-Si-based alloy to be used in the welded structure.

Background Art

A seismic damper is a building member incorporated into a building to protect the building from an earthquake, and converts a shake of the building due to the earthquake into thermal energy and absorbs the vibration energy. Examples of the seismic damper include steel material-based seismic dampers in which vibration is absorbed by an elastic-plastic deformation hysteresis of a steel material, viscoelastic body-based seismic dampers in which vibration is absorbed by viscoelastic deformation of a polymer-based material, and oil dampers in which vibration is absorbed by a viscous flow of an oil, and the characteristics of each damper are utilized when the damper is used. Among these dampers, the steel material-based seismic dampers have features that the cost is low, maintenance is unnecessary, and the rigidity is high, and are widely applied to various damping structures.

A damping alloy has been recently developed that has a fatigue life of about 10 times that of a conventional damping steel material or a general steel material for building structure (hereinafter, also referred to as "conventional steel material") (see Patent Literature 1), and a new seismic damper in which such a damping alloy is used as a core material has been applied to a large building structure such as a skyscraper or a large-scale exhibition hall. The new seismic damper is expected to further prevail as a seismic damper having a long fatigue life that can withstand repetitive long-period earthquake motion, aftershocks after a large earthquake, and simultaneously occurring earthquakes. In addition, a welding wire corresponding to a component of an alloy as described in Patent Literature 1 (hereinafter, also referred to as "Fe-Mn-Si alloy (FMS alloy)") has also been developed (see, for example, Patent Literature 2), and a brace-type seismic damper has also been developed in which carbon steel is welded and applied to a joint portion of a seismic damper plate material to a building frame to form a cross-shaped cross section and thus the proof stress and the durability against buckling are improved in the joint portion.

Citation List

Patent Literature

Patent Literature 1: JP 2014-129567 A
Patent Literature 2: JP 2015-150586 A

Non Patent Literature

Non Patent Literature 1: T. Sawaguchi, et al., Designing Fe-Mn-Si alloys with improved low-cycle fatigue lives, Scripta Mater 99(0) (2015) 49-52.
Non Patent Literature 2: D. T. Pierce, J.A. Jimenez, J. Bentley, D. Raabe, C. Oskay, J.E. Wittig, The influence of manganese content on the stacking fault and austenite/epsilon-martensite interfacial energies in Fe-Mn-(Al-Si) steels investigated by experiment and theory, Acta Mater 68(15) (2014) 238-253.
Non Patent Literature 3: S. Curtze, V.T. Kuokkala, A. Oikari, J. Talonen, H. Hanninen, Thermodynamic modeling of the stacking fault energy of austenitic steels, Acta Mater, 59(3) (2011) 1068-1076.
Non Patent Literature 4: S. Allain, J.P. Chateau, O. Bouaziz, S. Migot, N. Guelton, Correlations between the calculated stacking fault energy and the plasticity mechanisms in Fe-Mn-C alloys, Materi Sci Eng A 387 (2004) 158-162.

Summary of Invention

Technical Problem

The brace-type seismic damper is incorporated into a brace portion and used, and at the time of an earthquake, is subjected to cyclic elastic-plastic deformation such as cyclic tension-compression, cyclic alternating shearing, and cyclic bending due to a shake of a building, and absorbs the energy of the earthquake motion. In view of application to large building structures and response to a large earthquake, seismic dampers are recently required to have further high proof stress and high rigidity, and therefore the axial force bearing area is to be increased in the dampers.

The seismic dampers that have been developed using an FMS alloy have a core material portion in which an FMS alloy plate material is used as it is (in a rolled state) in a straight line in the cross section, and only one method of increasing the axial force bearing area without changing the aspect width of the damper is increasing the plate thickness of the FMS alloy plate material, but there is a restriction on the plate thickness of the plate material that can be manufactured. As a method of increasing the axial force bearing area of the damper, forming a cross-shaped or H-shaped cross section in the core material portion is effective. The cross-shaped or H-shaped cross section can be produced by welding and assembling alloy plate materials. However, if an FMS alloy is welded to a plate material having a different component, such as carbon steel, using a welding wire having a component composition different from that of the FMS alloy, the welded portion has a component composition different from that of the FMS alloy as a damping alloy, and as a result, there is a problem that the fatigue resistance mechanism of the FMS alloy does not operate and the fatigue life may be reduced to the same level as in the conventional steel material. Furthermore, there is a problem that a weld defect such as solidification crack, segregation, and a precipitate is formed in the welded portion and as a result, the welded portion tends to be a weak point of metal fatigue and may cause further reduction in the fatigue life.

Therefore, an object of the present invention is to provide a welded structure, such as a seismic damper assembled using a welding method, in which even the welded portion exhibits an excellent fatigue characteristic that is equivalent to that of the steel material of the base material.

Another object of the present invention is to provide an alloy steel to be used in the welded structure.

Another object of the present invention is to provide a welded structure in which the alloy steel is used and a welding material in which the alloy steel is used.

Solution to Problem

As a way of making the fatigue characteristic of a welded portion equivalent to that of a base material in a structure assembled using a welding method (hereinafter, referred to as "welded structure"), the present inventors have paid attention to the microstructure of the welded portion before the welded structure is subjected to cyclic elastic-plastic deformation (hereinafter, also simply referred to as "deformation") and to the deformation mechanism of the microstructure of the welded portion when the welded structure is subjected to the deformation. Hereinafter, tension-compression elastic-plastic deformation will be described as a specific example of cyclic elastic-plastic deformation to which a welded structure is subjected, but it should be noted that deformation modes other than tension-compression, such as shearing and bending described above, are also included in objects of the present invention. In the present description, the term "welded portion" refers to a part, in a part to which welding is applied (site subjected to welding), that is formed of a weld metal (metal melted and solidified during welding) and a weld heat-affected zone (a region, in a base material, in which no melt is caused but the microstructure and the characteristics are changed by the welding operation, also referred to as HAZ). In the art, a part to which welding is applied is generally known to be a continuous assembly of the welded portion and the base material that is an area outside the weld heat-affected zone and is not thermally affected.

As a result of intensive studies, the present inventors have found that if the solidification mode of a weld metal, the microstructure of a welded portion before deformation, and the deformation mechanism of the microstructure of the welded portion subjected to deformation satisfy certain conditions, a fatigue resistance mechanism similar to that of the damping alloy of the base material can operate even in the welded portion of the welded structure, and the present invention has been completed.

That is, the gist of the present invention includes the following [1] to [12].

[1] A welded structure having a structure in which a plurality of steel materials is welded with a welding material, said steel materials being a base material, wherein

a weld metal has a component composition in an FA solidification mode,

the base material, a weld heat-affected zone (HAZ), and the weld metal have a metal structure, before cyclic elastic-plastic deformation, including 85 vol% or more and less than 100 vol% of a $\gamma$ austenite phase (FCC structure), 0 vol% or more and less than 14.5 vol% of a total of a $\delta$ ferrite phase (BCC structure or BCT structure) and an initial $\varepsilon$ martensite phase, and 0 vol% or more and less than 0.5 vol% of a total of inevitable precipitates/inclusions such as a carbide, a nitride, an oxide, and a silicide,

the base material, the weld heat-affected zone, and the weld metal have a metal structure, immediately before fatigue fracture or at a time of fatigue fracture, including 10 vol% or more and less than 90 vol% of a deformation-induced $\varepsilon$ martensite phase (HCP structure), 0 vol% or more and less than 12 vol% of a deformation-induced $\alpha'$ martensite phase (BCC structure or BCT structure), 10 vol% or more and 90 vol% or less of a remaining $\gamma$ austenite phase, 0 vol% or more and less than 14.5 vol% of a total of a $\delta$ ferrite phase and an initial $\varepsilon$ martensite phase, and

0 vol% or more and less than 0.5 vol% of a total of inevitable precipitates/inclusions such as a carbide, a nitride, an oxide, and a silicide, and

when the welded structure is subjected to cyclic elastic-plastic deformation, a microstructure changes from the metal structure before cyclic elastic-plastic deformation to the metal structure immediately before fatigue fracture or at a time of fatigue fracture, and in response to sequential cyclic elastic-plastic deformation, deformation-induced martensitic transformation from a $\gamma$ austenite phase to an $\varepsilon$ martensite phase and a reverse transformation from an $\varepsilon$ martensite phase to a $\gamma$ austenite phase occur alternately and repeatedly and a volume percentage of a deformation-induced $\varepsilon$ martensite phase sequentially increases.

[2] The welded structure according to [1], wherein

the base material, the weld heat-affected zone, and the weld metal consist of a component composition of, before the cyclic elastic-plastic deformation:

12 mass% $\leq$ Mn $\leq$ 18 mass%, 5 mass% $\leq$ Cr $\leq$ 15 mass%, 5 mass% $\leq$ Ni < 12 mass%, and 2 mass% $\leq$ Si $\leq$ 6 mass%, and 0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements, with the balance being Fe and inevitable impurities,

wherein the component composition satisfies:

a condition that a Gibbs free energy difference between a $\gamma$ phase and an $\varepsilon$ phase, $\Delta G^{\gamma\rightarrow\varepsilon}$, defined by Formulae 1 to 5 described below and thermodynamic parameters in Table 1 satisfies

$$-150 \text{ J/mol} < \Delta G^{\gamma \rightarrow \varepsilon} < 50 \text{ J/mol};$$

and

a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%Cr]eq/[\%Ni]eq \leq 1.96.$$

**Formula 1**

$$\Delta G^{\gamma\rightarrow\varepsilon} = \Delta G_{chem}^{\gamma\rightarrow\varepsilon} + \Delta G_{mag}^{\gamma\rightarrow\varepsilon}$$

(In formula 1, $\Delta G_{chem}^{\gamma\rightarrow\varepsilon}$ represents a term of chemical free energy, and $\Delta G_{mag}^{\gamma\rightarrow\varepsilon}$ represents a term of magnetic free energy.)

**Formula 2**

$$\Delta G_{chem}^{\gamma\rightarrow\varepsilon} = x_{Fe}G_{Fe}^{\gamma\rightarrow\varepsilon} + x_{Mn}G_{Mn}^{\gamma\rightarrow\varepsilon} + x_{Cr}G_{Cr}^{\gamma\rightarrow\varepsilon} + x_{Ni}G_{Ni}^{\gamma\rightarrow\varepsilon} + x_{Si}G_{Si}^{\gamma\rightarrow\varepsilon}$$

$$+ x_{Al}G_{Al}^{\gamma\rightarrow\varepsilon} + x_{Fe}x_{Mn}L_{FeMn}^{\gamma\rightarrow\varepsilon} + x_{Fe}x_{Cr}L_{FeCr}^{\gamma\rightarrow\varepsilon} + x_{Fe}x_{Ni}L_{FeNi}^{\gamma\rightarrow\varepsilon}$$

$$+ x_{Fe}x_{Si}L_{FeSi}^{\gamma\rightarrow\varepsilon} + x_{Fe}x_{Al}L_{FeAl}^{\gamma\rightarrow\varepsilon} + x_{Mn}x_{Si}L_{MnSi}^{\gamma\rightarrow\varepsilon} + x_{Mn}x_{Al}L_{MnAl}^{\gamma\rightarrow\varepsilon}$$

$$+ x_{Cr}x_{Ni}L_{CrNi}^{\gamma\rightarrow\varepsilon}$$

(In formula 2, $x_{Fe}$, $x_{Mn}$, $x_{Cr}$, $x_{Ni}$, $x_{Si}$, and $x_{Al}$ are the molar fractions of Fe, Mn, Cr, Ni, Si, and Al, $G_{Fe}^{\gamma\rightarrow\varepsilon}$、 $G_{Mn}^{\gamma\rightarrow\varepsilon}$、 $G_{Cr}^{\gamma\rightarrow\varepsilon}$、 $G_{Ni}^{\gamma\rightarrow\varepsilon}$、 $G_{Si}^{\gamma\rightarrow\varepsilon}$、 $G_{Al}^{\gamma\rightarrow\varepsilon}$ are the partial molar free energies of Fe, Mn, Cr, Ni, Si, and Al, and $L_{FeMn}^{\gamma\rightarrow\varepsilon}$、 $L_{FeCr}^{\gamma\rightarrow\varepsilon}$、 $L_{FeNi}^{\gamma\rightarrow\varepsilon}$、 $L_{FeSi}^{\gamma\rightarrow\varepsilon}$、 $L_{FeAl}^{\gamma\rightarrow\varepsilon}$、 $L_{MnSi}^{\gamma\rightarrow\varepsilon}$、 $L_{MnAl}^{\gamma\rightarrow\varepsilon}$ , and $L_{CrNi}^{\gamma\rightarrow\varepsilon}$ are the interaction parameters of Fe-Mn, Fe - Cr, Fe - Ni, Fe-Si, Fe-Al, Mn-Si, Mn-Al, Cr-Ni.)

**Formula 3**

$$\Delta G_{mag}^{\gamma \to \varepsilon} = RT \ln(\beta^{\varepsilon} + 1) f^{\varepsilon}\left(T/T_N^{\varepsilon}\right) - RT \ln(\beta^{\gamma} + 1) f^{\gamma}(T/T_N^{\gamma})$$

(in formula 3, R is a gas constant value R = 8.31 JK$^{-1}$ mol$^{-1}$, T is a temperature, $\beta^{\gamma}$, and $\beta^{\varepsilon}$ are the magnetic moments of $\gamma$ phase and $\varepsilon$ phase, $T_N^{\gamma}$, and $T_N^{\varepsilon}$ are the paramagnetic-antiferromagnetic transition temperature (Neel point) of $\gamma$ phase and $\varepsilon$ phase, and $f^{\gamma}\left(T/T_N^{\gamma}\right)$, and $f^{\varepsilon}(T/T_N^{\varepsilon})$ are the functions obtained by formulae 4 and 5.)

**Formula 4**

$$f^{\gamma} = 1 - \left[\frac{79(T/T_N^{\gamma})^{-1}}{140 \cdot 0.28} + \frac{474}{497}\left(\frac{1}{0.28} - 1\right)\left(\frac{(T/T_N^{\gamma})^3}{6} + \frac{(T/T_N^{\gamma})^9}{135} + \frac{(T/T_N^{\gamma})^{15}}{600}\right)\right]\Big/ D \quad (T/T_N^{\gamma} \leq 1)$$

$$= -\left[\frac{(T/T_N^{\gamma})^{-5}}{10} + \frac{(T/T_N^{\gamma})^{-15}}{315} + \frac{(T/T_N^{\gamma})^{-25}}{1500}\right]\Big/ D \quad (T/T_N^{\gamma} > 1)$$

(In formula 4, D is a constant value, and D =2. 342456517.)

**Formula 5**

$$f^{\varepsilon} = 1 - \left[\frac{79(T/T_N^{\varepsilon})^{-1}}{140 \cdot 0.28} + \frac{474}{497}\left(\frac{1}{0.28} - 1\right)\left(\frac{(T/T_N^{\varepsilon})^3}{6} + \frac{(T/T_N^{\varepsilon})^9}{135} + \frac{(T/T_N^{\varepsilon})^{15}}{600}\right)\right]\Big/ D \quad (T/T_N^{\varepsilon} \leq 1)$$

$$= -\left[\frac{(T/T_N^{\varepsilon})^{-5}}{10} + \frac{(T/T_N^{\varepsilon})^{-15}}{315} + \frac{(T/T_N^{\varepsilon})^{-25}}{1500}\right]\Big/ D \quad (T/T_N^{\varepsilon} > 1)$$

(In formula 5, D is a constant value, and D =2.342456517.)

**Formula 6**

$$\text{Cr equivalent } ([\%C r] \, e q) = [\%C r] + [\%Mo] + 1.\,5 \, [\%S i]$$
$$+ 0.\,5 \, [\%N b]$$

**Formula 7**

$$\text{Ni equivalent } ([\%N i] \, e q) = [\%N i] + 30 \, [\%C] + 0.\,28 \, [\%M n]$$

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \text{ (J/mol)} = -2243.38 + 4.309T$$

$$\Delta G_{Mn}^{\gamma \to \varepsilon} \text{ (J/mol)} = -1000 + 1.123T$$

$$\Delta G_{Cr}^{\gamma \to \varepsilon} \text{ (J/mol)} = 1370 - 0.163T$$

$$\Delta G_{Ni}^{\gamma \to \varepsilon} \text{ (J/mol)} = 1046 + 1.255T$$

(continued)

$$\Delta G_{Si}^{\gamma \rightarrow \varepsilon} \text{ (J/mol)} = -560 - 8T$$

$$\Delta G_{Al}^{\gamma \rightarrow \varepsilon} \text{ (J/mol)} = 2800 + 5T$$

$$L_{FeMn}^{\gamma \rightarrow \varepsilon} \text{ (J/mol)} = 2873 - 717(x_{Fe} - x_{Mn})$$

$$L_{FeCr}^{\gamma \rightarrow \varepsilon} \text{ (J/mol)} = -1410(x_{Cr} - x_{Fe})$$

$$L_{FeNi}^{\gamma \rightarrow \varepsilon} \text{ (J/mol)} = 2095$$

$$L_{FeSi}^{\gamma \rightarrow \varepsilon} \text{ (J/mol)} = 2850 + 3520(x_{Fe} - x_{Si})$$

$$L_{FeAl}^{\gamma \rightarrow \varepsilon} \text{ (J/mol)} = 3326$$

$$L_{MnSi}^{\gamma \rightarrow \varepsilon} \text{ (J/mol)} = 1780$$

$$L_{MnAl}^{\gamma \rightarrow \varepsilon} \text{ (J/mol)} = -2510 - 12.845T + (13891 - 3.766T)(x_{Mn} - x_{Al})$$

$$+(83931 - 47T)(x_{Mn} - x_{Al})^2$$

$$\beta^{\gamma} = 0.7x_{Fe} + 0.62x_{Mn} + 0.62x_{Ni} - 0.8x_{Cr} - 0.64x_{Fe}x_{Mn} - 4x_C$$

$$\beta^{\varepsilon} = 0.62x_{Mn} - 4x_C$$

$$T_N^{\varepsilon} \text{ (K)} = 251.71 + 681x_{Mn} - 272x_{Cr} - 1800x_{Ni} - 1151x_{Al}$$

$$-1575x_{Si} - 1740x_C$$

$$T_N^{\varepsilon} \text{ (K)} = 580x_{Mn}$$

[3] The welded structure according to [2], wherein the base material, the weld heat-affected zone, and the weld metal have a substantially identical component composition before the cyclic elastic-plastic deformation.

[4] The welded structure according to [2], wherein the base material, the weld heat-affected zone, and the weld metal have different component compositions before the cyclic elastic-plastic deformation.

[5] The welded structure according to any one of [1] to [4], wherein a number of cycles to fracture by strain control cyclic tension-compression deformation with an amplitude of 1% is 4000 or more.

[6] A Fe-Mn-Cr-Ni-Si-based alloy to be used in the welded structure according to any one of [1] to [5], said Fe-Mn-Cr-Ni-Si-based alloy consisting of a component composition of:

12 mass% ≤ Mn ≤ 18 mass%, 5 mass% ≤ Cr ≤ 15 mass%, 5 mass% ≤ Ni < 12 mass%, and 2 mass% ≤ Si ≤ 6 mass%, and 0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements,

with the balance being Fe and inevitable impurities,

wherein the component composition satisfies:

a condition that a Gibbs free energy difference between a γ phase and an ε phase, $\Delta G^{\gamma \rightarrow \varepsilon}$, defined by Formulae 1 to 5 described below and thermodynamic parameters in Table 1 satisfies

$$-150 \text{ J/mol} < \Delta G^{\gamma \rightarrow \varepsilon} < 50 \text{ J/mol};$$

and

a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%Cr]eq/[\%Ni]eq \leq 1.96.$$

**Formula 1**

$$\Delta G^{\gamma \to \varepsilon} = \Delta G^{\gamma \to \varepsilon}_{chem} + \Delta G^{\gamma \to \varepsilon}_{mag}$$

(In formula 1, $\Delta G^{\gamma \to \varepsilon}_{chem}$ represents a term of chemical free energy, and $\Delta G^{\gamma \to \varepsilon}_{mag}$ represents a term of magnetic free energy.)

**Formula 2**

$$\Delta G^{\gamma \to \varepsilon}_{chem} = x_{Fe} G^{\gamma \to \varepsilon}_{Fe} + x_{Mn} G^{\gamma \to \varepsilon}_{Mn} + x_{Cr} G^{\gamma \to \varepsilon}_{Cr} + x_{Ni} G^{\gamma \to \varepsilon}_{Ni} + x_{Si} G^{\gamma \to \varepsilon}_{Si}$$

$$+ x_{Al} G^{\gamma \to \varepsilon}_{Al} + x_{Fe} x_{Mn} L^{\gamma \to \varepsilon}_{FeMn} + x_{Fe} x_{Cr} L^{\gamma \to \varepsilon}_{FeCr} + x_{Fe} x_{Ni} L^{\gamma \to \varepsilon}_{FeNi}$$

$$+ x_{Fe} x_{Si} L^{\gamma \to \varepsilon}_{FeSi} + x_{Fe} x_{Al} L^{\gamma \to \varepsilon}_{FeAl} + x_{Mn} x_{Si} L^{\gamma \to \varepsilon}_{MnSi} + x_{Mn} x_{Al} L^{\gamma \to \varepsilon}_{MnAl}$$

$$+ x_{Cr} x_{Ni} L^{\gamma \to \varepsilon}_{CrNi}$$

(In formula 2, $x_{Fe}$, $x_{Mn}$, $x_{Cr}$, $x_{Ni}$, $x_{Si}$, and $x_{Al}$ are the molar fractions of Fe, Mn, Cr, Ni, Si, and Al, $G^{\gamma \to \varepsilon}_{Fe}$, $G^{\gamma \to \varepsilon}_{Mn}$, $G^{\gamma \to \varepsilon}_{Cr}$, $G^{\gamma \to \varepsilon}_{Ni}$, $G^{\gamma \to \varepsilon}_{Si}$, $G^{\gamma \to \varepsilon}_{Al}$ are the partial molar free energies of Fe, Mn, Cr, Ni, Si, and Al, and $L^{\gamma \to \varepsilon}_{FeMn}$, $L^{\gamma \to \varepsilon}_{FeCr}$, $L^{\gamma \to \varepsilon}_{FeNi}$, $L^{\gamma \to \varepsilon}_{FeSi}$, $L^{\gamma \to \varepsilon}_{FeAl}$, $L^{\gamma \to \varepsilon}_{MnSi}$, and are the interaction parameters of Fe-Mn, Fe-Cr, Fe-Ni, Fe-Si, Fe-Al, Mn-Si, Mn-Al, Cr-Ni.)

**Formula 3**

$$\Delta G^{\gamma \to \varepsilon}_{mag} = RT \ln(\beta^{\varepsilon} + 1) f^{\varepsilon}\left(T/T^{\varepsilon}_N\right) - RT \ln(\beta^{\gamma} + 1) f^{\gamma}(T/T^{\gamma}_N)$$

(in formula 3, R is a gas constant value R = 8.31 JK$^{-1}$ mol$^{-1}$, T is a temperature, $\beta^{\gamma}$, and $\beta^{\varepsilon}$ are the magnetic moments of $\gamma$ phase and $\varepsilon$ phase, $T^{\gamma}_N$, and $T^{\varepsilon}_N$ are the paramagnetic-antiferromagnetic transition temperature (Neel point) of $\gamma$ phase and $\varepsilon$ phase, and $f^{\gamma}\left(T/T^{\gamma}_N\right)$, and $f^{\varepsilon}(T/T^{\varepsilon}_N)$ are the functions obtained by formulae 4 and 5.)

**Formula 4**

$$f^{\gamma} = 1 - \left[\frac{79(T/T^{\gamma}_N)^{-1}}{140 \cdot 0.28} + \frac{474}{497}\left(\frac{1}{0.28} - 1\right)\left(\frac{(T/T^{\gamma}_N)^3}{6} + \frac{(T/T^{\gamma}_N)^9}{135} + \frac{(T/T^{\gamma}_N)^{15}}{600}\right)\right] \Big/ D \quad (T/T^{\gamma}_N \leq 1)$$

$$= -\left[\frac{(T/T^{\gamma}_N)^{-5}}{10} + \frac{(T/T^{\gamma}_N)^{-15}}{315} + \frac{(T/T^{\gamma}_N)^{-25}}{1500}\right] \Big/ D \quad (T/T^{\gamma}_N > 1)$$

(In formula 4, D is a constant value, and D =2. 342456517.)

**Formula 5**

$$f^{\varepsilon} = 1 - \left[\frac{79(T/T_N^{\varepsilon})^{-1}}{140 \cdot 0.28} + \frac{474}{497}\left(\frac{1}{0.28} - 1\right)\left(\frac{(T/T_N^{\varepsilon})^3}{6} + \frac{(T/T_N^{\varepsilon})^9}{135} + \frac{(T/T_N^{\varepsilon})^{15}}{600}\right)\right]\Big/ D \quad (T/T_N^{\varepsilon} \leq 1)$$

$$= -\left[\frac{(T/T_N^{\varepsilon})^{-5}}{10} + \frac{(T/T_N^{\varepsilon})^{-15}}{315} + \frac{(T/T_N^{\varepsilon})^{-25}}{1500}\right]\Big/ D \quad (T/T_N^{\varepsilon} > 1)$$

(In formula 5, D is a constant value, and D =2.342456517.)

**Formula 6**

$$\text{Cr equivalent } ([\%Cr]eq) = [\%Cr] + [\%Mo] + 1.5[\%Si]$$
$$+ 0.5[\%Nb]$$

**Formula 7**

$$\text{Ni equivalent } ([\%Ni]eq) = [\%Ni] + 30[\%C] + 0.28[\%Mn]$$

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \text{ (J/mol)} = -2243.38 + 4.309T$$

$$\Delta G_{Mn}^{\gamma \to \varepsilon} \text{ (J/mol)} = -1000 + 1.123T$$

$$\Delta G_{Cr}^{\gamma \to \varepsilon} \text{ (J/mol)} = 1370 - 0.163T$$

$$\Delta G_{Ni}^{\gamma \to \varepsilon} \text{ (J/mol)} = 1046 + 1.255T$$

$$\Delta G_{Si}^{\gamma \to \varepsilon} \text{ (J/mol)} = -560 - 8T$$

$$\Delta G_{Al}^{\gamma \to \varepsilon} \text{ (J/mol)} = 2800 + 5T$$

$$L_{FeMn}^{\gamma \to \varepsilon} \text{ (J/mol)} = 2873 - 717(x_{Fe} - x_{Mn})$$

$$L_{FeCr}^{\gamma \to \varepsilon} \text{ (J/mol)} = -1410(x_{Cr} - x_{Fe})$$

$$L_{FeNi}^{\gamma \to \varepsilon} \text{ (J/mol)} = 2095$$

$$L_{FeSi}^{\gamma \to \varepsilon} \text{ (J/mol)} = 2850 + 3520(x_{Fe} - x_{Si})$$

$$L_{FeAl}^{\gamma \to \varepsilon} \text{ (J/mol)} = 3326$$

$$L_{MnSi}^{\gamma \to \varepsilon} \text{ (J/mol)} = 1780$$

$$L_{MnAl}^{\gamma \to \varepsilon} \text{ (J/mol)} = -2510 - 12.845T + (13891 - 3.766T)(x_{Mn} - x_{Al})$$
$$+ (83931 - 47T)(x_{Mn} - x_{Al})^2$$

(continued)

$$\beta^\gamma = 0.7x_{Fe} + 0.62x_{Mn} + 0.62x_{Ni} - 0.8x_{Cr} - 0.64x_{Fe}x_{Mn} - 4x_C$$

$$\beta^\varepsilon = 0.62x_{Mn} - 4x_C$$

$$T_N^\varepsilon \ (\text{K}) = 251.71 + 681x_{Mn} - 272x_{Cr} - 1800x_{Ni} - 1151x_{Al}$$

$$-1575x_{si} - 1740x_C$$

$$T_N^\varepsilon \ (\text{K}) = 580x_{Mn}$$

[7] The Fe-Mn-Cr-Ni-Si-based alloy according to [6], wherein in said Fe-Mn-Cr-Ni-Si-based alloy Cr and Ni are present in amounts of 11 mass% ≤ Cr ≤ 14 mass% and 6 mass% ≤ Ni ≤ 7.5 mass%.

[8] The Fe-Mn-Cr-Ni-Si-based alloy according to [6] or [7], wherein a number of cycles to fracture by strain control cyclic tension-compression deformation with an amplitude of 1% is 4000 or more.

[9] A welded structure having a structure in which the Fe-Mn-Cr-Ni-Si-based alloy according to any one of [6] to [8] is welded with a welding material.

[10] The welded structure according to [9], wherein the welding material is produced using the Fe-Mn-Cr-Ni-Si-based alloy according to any one of [6] to [8].

[11] The welded structure according to [9] or [10], wherein said welded structure is a seismic damping member.

[12] A welding material produced by using the Fe-Mn-Cr-Ni-Si-based alloy according to any one of [6] to [8].

Advantageous Effects of Invention

According to the present invention, if the solidification mode of a weld metal, the microstructure of a welded portion before deformation, and the deformation mechanism of the microstructure of the welded portion subjected to deformation satisfy certain conditions, a fatigue resistance mechanism similar to that of the steel material of the base material can operate in the welded portion.

Therefore, according to the present invention, a welded structure can be provided in which even the welded portion exhibits an excellent fatigue characteristic that is equivalent to that of the steel material of the base material.

Furthermore, according to the present invention, an alloy steel to be used in the welded structure can also be provided.

Furthermore, according to the present invention, a welded structure in which the alloy steel is used and a welding material in which the alloy steel is used can also be provided.

Brief Description of Drawings

Fig. 1 shows microscopic images showing the results of confirming the presence or absence of solidification crack in a weld melt run experiment: (a) Example 1-1, (b) Example 1-2.

Fig. 2 is a diagram obtained by plotting point coordinates ([%Cr]eq, [%Ni]eq) on a Schaeffler diagram on the basis of the component compositions of the alloys of Examples 1-1 to 1-10 and Examples 1-15 to 1-22.

Description of Embodiments

Hereinafter, embodiments of the present invention will be described in detail.

The description of the constituent feature described below may be made on the basis of a representative embodiment of the present invention, but the present invention is not limited to such an embodiment.

In a welded structure, using a welding material having a component composition identical or similar to that of the steel material of the base material (so-called similar composition metal welding material) is generally considered to be effective for obtaining a welded portion having a fatigue characteristic equivalent to that of the base material. However, according to a preliminary experiment conducted by the present inventors, when plate materials of the FMS alloy described in Patent Literature 1 are welded to each other using a similar composition metal welding wire having a component composition similar to that of the FMS alloy, welding defects such as solidification crack, segregation, and a precipitate are likely to occur in the welded portion, and a fatigue crack defect may occur due to these welding defects. As a result of various studies, it has been found that the cause of the defects is that the weld metal has a component composition in an A solidification mode, that is, the solidification mode of the weld metal starts with solidification from the liquid phase to the $\gamma$ phase and ends with solidification to the $\gamma$ phase.

From these findings, the present inventors have conceived that in order for a welded structure to exhibit an excellent fatigue characteristic as a whole, the microstructure and the deformation mechanism of the microstructure are to satisfy conditions completely different from conventional conditions. As a result of various studies, in a welded structure in which a damping alloy represented by an FMS alloy is used as a base material, the present inventors have found conditions under which even the welded portion exhibits an excellent fatigue characteristic that is equivalent to that of the base material, and the present invention has been completed.

[Welded Structure]

A welded structure according to an embodiment of the present invention is a welded structure having a structure in which a plurality of steel materials is welded with a welding material, said steel materials being a base material, wherein a weld metal has a component composition in an FA solidification mode, the base material, a weld heat-affected zone (HAZ), and the weld metal have a metal structure, before cyclic elastic-plastic deformation, including 85 vol% or more and less than 100 vol% of a $\gamma$ austenite phase (FCC structure), 0 vol% or more and less than 14.5 vol% of a total of a $\delta$ ferrite phase (BCC structure or BCT structure) and an initial $\varepsilon$ martensite phase, and 0 vol% or more and less than 0.5 vol% of a total of inevitable precipitates/inclusions such as a carbide, a nitride, an oxide, and a silicide, the base material, the weld heat-affected zone, and the weld metal have a metal structure, immediately before fatigue fracture or at a time of fatigue fracture, including 10 vol% or more and less than 90 vol% of a deformation-induced $\varepsilon$ martensite phase (HCP structure), 0 vol% or more and less than 12 vol% of a deformation-induced $\alpha'$ martensite phase (BCC structure or BCT structure), 10 vol% or more and 90 vol% or less of a remaining $\gamma$ austenite phase, 0 vol% or more and less than 14.5 vol% of a total of a $\delta$ ferrite phase and an initial $\varepsilon$ martensite phase, and 0 vol% or more and less than 0.5 vol% of a total of inevitable precipitates/inclusions such as a carbide, a nitride, an oxide, and a silicide, and when the welded structure is subjected to cyclic elastic-plastic deformation, a microstructure changes from the metal structure before cyclic elastic-plastic deformation to the metal structure immediately before fatigue fracture or at a time of fatigue fracture, and in response to sequential cyclic elastic-plastic deformation, deformation-induced martensitic transformation from a $\gamma$ austenite phase to an $\varepsilon$ martensite phase and a reverse transformation from an $\varepsilon$ martensite phase to a $\gamma$ austenite phase occur alternately and repeatedly and a volume percentage of a deformation-induced $\varepsilon$ martensite phase sequentially increases.

In the welded structure of the present embodiment, the $\delta$ ferrite phase is intended to be formed by a base material manufacturing process or a cooling treatment after welding.

The initial $\varepsilon$ martensite phase is distinguished from the deformation-induced $\varepsilon$ martensite phase formed by the deformation-induced martensitic transformation from a $\gamma$ austenite phase to an $\varepsilon$ martensite phase described below. The initial $\varepsilon$ martensite phase is formed during cooling to room temperature after a heat treatment in the base material manufacturing process and is present before the cyclic elastic-plastic deformation, and is intended to be an $\varepsilon$ martensite phase not derived from the deformation-induced martensitic transformation.

The deformation-induced $\alpha'$ martensite phase is intended to be formed by secondary $\varepsilon \rightarrow \alpha'$ martensitic transformation of a part of the deformation-induced $\varepsilon$ martensite phase.

The remaining $\gamma$ austenite phase is intended to be a $\gamma$ austenite phase that remains untransformed even after the cyclic elastic-plastic deformation as before the cyclic elastic-plastic deformation.

In the welded structure of the present embodiment, the weld metal in the welded portion has a component composition in the FA solidification mode. Here, the FA solidification mode is a solidification mode in solidification of a steel material, and in the FA solidification mode, a ferrite phase first crystallizes out from a liquid phase and then an austenite phase crystallizes out. The characteristics of the weld metal can be grasped by plotting on a Schaeffler diagram showing the component composition of the weld metal. The solidification mode occurring in a weld metal generally depends on the component composition of the weld metal, and therefore, in order to suppress solidification crack of the weld metal, it is effective to select the component composition of the welding material on the basis of the component composition of the base material (material to be welded) so that the weld metal is in the FA solidification mode. Furthermore, the component composition of the weld metal depends on welding conditions, the groove shape, the dilution rate, and the like, and therefore the component composition of the welding material is selected in consideration of these so that the weld metal is in the FA solidification mode. The dilution rate is a proportion of the base material melting amount to the weld metal total amount. If the weld metal has a component composition in the FA solidification mode, the weld metal portion can have low solidification crack susceptibility.

In other words, in a case where the welded structure of the present embodiment includes a base material that is a steel material having a component composition in the FA solidification mode and is welded to another base material that is the same material, the welding material may have a component composition identical with that of the base material. Here, the phrase that steel materials have an "identical" component composition is intended to mean that a difference in content (mass%) of each component element between the target steel materials is less than ±0.5. In this case, the weld metal can be considered to have a component composition substantially identical with the component composition of the base material, and therefore the weld metal has a component composition in the FA solidification mode. It can be said that the weld heat-affected zone also has a component composition in the FA solidification mode.

In a case where a base material having a component composition in the FA solidification mode is welded to another base material that is the same material, the welding material may have a component composition different from that of the base material. In this case, the welding material may have a component composition in the FA solidification mode or in a solidification mode other than the FA solidification mode. In the former case, the base materials having a component composition in the FA solidification mode are welded to each other with the welding material having a component composition in the FA solidification mode to obtain a welded structure, and therefore the weld metal has a component composition in the FA solidification mode. It can be said that the weld heat-affected zone also has a component composition in the FA solidification mode. In the latter case, the component composition of the welding material is to be selected in consideration of, for example, the dilution rate (for example, 20% or more and 40% or less, or 20% or more and 30% or less) so that the weld metal is in the FA solidification mode.

In a case where different materials are welded, such as a case in which a plurality of kinds of base materials having a component composition in the FA solidification mode are welded, a case in which a plurality of kinds of base materials having a component composition in a solidification mode other than the FA solidification mode are welded, or a case in which a base material having a component composition in the FA solidification mode and a base material having a component composition in a solidification mode other than the FA solidification mode are welded, the component composition of the welding material is to be selected, as described above, in consideration of welding conditions, the groove shape, the dilution rate, and the like so that the weld metal is in the FA solidification mode.

In the welded structure of the present embodiment, the base material, the weld heat-affected zone (HAZ), and the weld metal have a metal structure, before cyclic elastic-plastic deformation, including a γ austenite phase (FCC structure) as a main phase, and when the welded structure is subjected to tension-compression elastic-plastic deformation, Shockley partial dislocation present in the γ austenite phase reciprocates on the same crystal plane, and thus a reversible deformation mechanism develops in which metal fatigue is less likely to progress. The motion of the partial dislocation is accompanied by deformation-induced martensitic transformation from the γ austenite phase to an ε martensite phase (deformation-induced ε martensite phase having an HCP structure), twinning deformation, extended dislocation slip, and the like, but the partial dislocation motion has the highest reversibility in a case where the bidirectional martensitic transformation between a γ austenite phase and a deformation-induced ε martensite phase becomes a dominant deformation mechanism. Meanwhile, lattice dislocation slip is deformation accompanied by irreversible dislocation motion such as cross slip that changes a slip plane, and therefore lattice dislocation slip is suppressed. Furthermore, in the formation of the deformation-induced α' martensite phase, dislocation in the α' phase or the surrounding γ phase is caused by volume expansion due to a change in the crystal structure from the FCC structure to the BCC structure, and the deformation is irreversible so that once transformed to the α' phase, the phase cannot be transformed to a γ phase reversely by deformation only, and therefore the formation of the deformation-induced α' martensite phase is suppressed. That is, in the welded structure of the present embodiment, a state is created in which a change in the microstructure due to cyclic elastic-plastic deformation is reversibly promoted by bidirectional martensitic transformation between a γ austenite phase and a deformation-induced ε martensite phase, and thus cyclic hardening is suppressed and the number of cycles to fracture is increased. Thus, the welded structure of the present embodiment achieves a number of cycles to fracture by strain control cyclic tension-compression deformation with an amplitude of 1% of 4000 or more.

In the present description, the term "bidirectional martensitic transformation" is used when attention is paid to the reversibility of the martensitic transformation between a γ austenite phase and an ε martensite phase under cyclic elastic-plastic deformation, and the term "deformation-induced martensitic transformation" is used when attention is paid to the fact that the martensitic transformation from the γ austenite phase to the ε martensite phase is induced by the cyclic elastic-plastic deformation. However, it should be noted that the deformation mechanisms of the microstructures that are meant by the terms are essentially the same.

The deformation-induced martensitic transformation from a γ austenite phase to an ε martensite phase and reverse transformation of this transformation may be expressed as "γ → ε transformation" and "ε → γ reverse transformation", respectively, using arrow symbols.

The base material, the weld heat-affected zone, and the weld metal before the deformation may have a metal structure including the δ ferrite phase, the initial ε martensite phase, and inevitable precipitates/inclusions such as a carbide, a nitride, an oxide, and a silicide as constituent phases not involved in the bidirectional martensitic transformation so that the volume percentage of the total of the δ ferrite phase and the initial ε martensite phase is 0 vol% or more and less than 14.5 vol%, and the volume percentage of the total of the inevitable precipitates/inclusions such as a carbide, a nitride, an oxide, and a silicide is 0 vol% or more and less than 0.5 vol%. The deformation-induced martensitic transformation from the γ austenite phase to the ε martensite phase due to the deformation and the reverse transformation occur alternately, and therefore the volume percentage of a deformation-induced ε martensite phase due to the cyclic deformation increases only slowly (that is, the volume percentage of a deformation-induced ε-martensite phase sequentially increases according to the sequential cyclic elastic-plastic deformation). Even when deformation is repeated immediately before fatigue fracture or until fatigue fracture, the volume percentage of the formed deformation-induced ε martensite phase is less than 90 vol%, and the untransformed γ austenite phase remains at 10 vol% or more. The degree of the deformation-induced martensitic transformation is not particularly limited as long as the volume percentage is less than the above-described value, and the base material, the weld heat-affected zone, and the weld metal may have a metal structure, immediately before fatigue fracture or at the time of fatigue fracture, including the deformation-induced ε martensite phase in an amount of 10 vol% or more, 15 vol% or more, 20 vol% or more, 25 vol% or more, 30 vol% or more, 40 vol% or more, 50 vol% or more, 60 vol% or more, 70 vol% or more, or 80 vol% or more. The base material, the weld heat-affected zone, and the weld metal may have a metal structure, immediately before fatigue fracture or at the time of fatigue fracture, including less than 12 vol% of the deformation-induced α' martensite phase. This is because although the deformation-induced α' martensitic transformation has a property of causing a chain reaction of further deformation-induced α' martensitic transformation by the autocatalytic reaction to significantly work-harden the material by a rapid increase in the volume percentage, if the degree of the progress of the deformation-induced ε → α' transformation is such that the deformation-induced α' martensite phase is generated at a volume percentage of less than 12 vol%, such a chain reaction does not occur, and the reversibility between the γ → ε transformation and the ε → γ reverse transformation is not disturbed.

More specifically, the welded structure of the present embodiment preferably has a volume percentage of the deformation-induced ε martensite phase of 10 vol% or more and less than 90 vol% in the microstructure after fatigue fracture by strain control cyclic tension-compression deformation with an amplitude of 1%. The fact that the microstructure after fatigue fracture satisfies the condition is an index indicating that a change in the microstructure of the welded structure due to cyclic elastic-plastic deformation is reversibly promoted by bidirectional martensitic transformation between a γ austenite phase and a deformation-induced ε martensite phase, and the present inventors have newly found this fact. In the welded structure of the present embodiment, the volume percentage of the deformation-induced ε martensite can be measured with an X-ray diffraction method, an electron backscatter diffraction method, or the like. For example, in the X-ray diffraction method, various analysis methods and software have been developed for accurate determination of the volume percentage based on the principle regarding the relation between the volume percentage of a constituent phase and the diffraction peak intensity ratio. In the electron backscatter diffraction method, an electron backscatter detector incorporated in a scanning electron microscope and dedicated software are used to determine a constituent phase in a several 100 micron square local region in a sample and the distribution and the volume of the constituent phase.

Here, in the welded structure of the present embodiment, it should be noted that the fact that the volume percentage of a deformation-induced ε martensite phase sequentially increases according to sequential cyclic elastic-plastic deformation does not necessarily mean that the volume percentage increases at a constant rate. Meanwhile, assuming that the number of cycles to fracture by strain control cyclic tension-compression deformation with an amplitude of 1% is 4000 and that the volume percentage of the deformation-induced ε-martensite phase is 90 vol% in the microstructure after fatigue fracture, it can be said that the volume percentage increases at an average rate of 0.0225 vol% per cycle. Therefore, in the welded structure of the present embodiment, one index of the increase in the volume percentage of the deformation-induced ε martensite phase under cyclic elastic-plastic deformation can be that the average increase rate per cycle is less than 0.0225 vol% in the microstructure after fatigue fracture by strain control cyclic tension-compression deformation with an amplitude of 1%.

In the welded structure of the present embodiment, in order to achieve a long life such that the number of cycles to fracture by strain control cyclic tension-compression deformation with an amplitude of 1% is 4000 or more, it is important that the base material, the weld heat-affected zone, and the weld metal have a metal structure, before cyclic elastic-plastic deformation, in which a mechanism is previously incorporated to delay the progress of metal fatigue by reversibly responding to tension-compression elastic-plastic deformation, in other words, it is important to appropriately design the microstructure before cyclic elastic-plastic deformation (tension-compression elastic-plastic deformation) and the deformation mechanism of the metal structure (in particular, the microstructure of the welded portion) at the time of the deformation. Patent Literature 1 and Non Patent Literature 1 disclose that interconversion by bidirectional martensitic transformation between a γ austenite phase having an FCC structure and an ε martensite phase having an HCP structure is effective for dramatically improving the fatigue life by reversibly progressing the repetitive motion of the Shockley partial dislocation present at the interface between the γ austenite phase and the deformation-induced ε martensite phase.

Patent Literature 1 and Non Patent Literature 1 describe the component, the structure, and the deformed structure of an alloy to be satisfied for prolonging the life of a rolled plate material of an FMS alloy in which the component and the crystal structure are homogenized by hot forging, hot rolling, and homogenizing heat treatment after melting and casting. However, in a welded structure, as a result of a weld solidification phenomenon, structures and welding defects such as solidification crack, precipitation, and component segregation are formed in the weld metal and the weld heat-affected zone, and therefore even if the component, the structure, and the deformed structure of the rolled plate material satisfy conditions for prolonging the life, the long life of the welded structure is not ensured. The solidification crack and the precipitation particularly promote generation and propagation of fatigue cracks and cause a significant decrease in the fatigue life. The component segregation causes formation of a phase, such as a $\delta$ ferrite phase, an initial $\varepsilon$ martensite phase, or a deformation-induced $\alpha'$ martensite phase, that is not involved in the bidirectional martensitic transformation required for prolongation of the life or may adversely affect the prolongation of the life.

As a result of intensive studies, the present inventors have found that, among welding defects, a problem that has the most fatal influence on the fatigue life of a welded structure or should be avoided the most in terms of management of an industrial product even if the fatigue life is long is solidification crack, and that when the component composition of the weld metal is designed to be in the FA solidification mode so as to avoid solidification crack, and when the base material, the weld heat-affected zone, and the weld metal have a metal structure including 85 vol% or more of a $\gamma$ austenite phase before cyclic elastic-plastic deformation, and when it is possible to previously incorporate, in the $\gamma$ austenite phase, a property to respond to cyclic elastic-plastic deformation by deformation-induced martensitic transformation from a $\gamma$ austenite phase to an $\varepsilon$ martensite phase and reverse transformation of this transformation that alternately occur, the welded structure can achieve the fatigue life such that the number of cycles to fracture by strain control cyclic tension-compression deformation with an amplitude of 1% is 4000 or more even if, for example, a phase that is not involved in the bidirectional martensitic transformation is formed in the rest portion as a result of component segregation or precipitation at the time of weld solidification.

Then, the present inventors have confirmed that in the welded structure that exhibits such an excellent fatigue characteristic, the microstructure after fatigue fracture by strain control cyclic tension-compression deformation with an amplitude of 1% has a volume percentage of the deformation-induced $\varepsilon$-martensite of less than 90 vol%, and the present inventors have found that this fact serves as an index that indicates a reversible response to cyclic elastic-plastic deformation (tension-compression elastic-plastic deformation).

As a phase that is not involved in the bidirectional martensitic transformation, a $\delta$ ferrite phase or an initial $\varepsilon$ martensite phase can be formed in a region where Cr is concentrated due to component segregation at the time of weld solidification. The $\delta$ ferrite phase does not develop a reversible deformation mechanism such that deformation-induced martensitic transformation from a $\gamma$ austenite phase to an $\varepsilon$ martensite phase and reverse transformation of this transformation alternately occur, and therefore the $\delta$ ferrite phase does not contribute to prolongation of the life. Furthermore, the initial $\varepsilon$ martensite phase formed in the cooling process after welding functions to inhibit development of a deformation-induced $\varepsilon$ martensite phase, which is formed by the deformation-induced martensitic transformation from the $\gamma$ austenite phase. This is because although both the deformation-induced $\varepsilon$ martensite phase and the initial $\varepsilon$ martensite phase have a property of developing into a thin plate-like form, the development directions with respect to the parent phase crystal are different and therefore the thin plate-like initial $\varepsilon$ martensite phase that is previously formed usually acts as a barrier against the thin plate-like deformation-induced $\varepsilon$ martensite phase that is to be developed later. However, the $\delta$ ferrite phase and the initial $\varepsilon$ martensite phase in a total amount of less than 14.5 vol% does not impair the effect such that the deformation-induced martensitic transformation from the $\gamma$ austenite phase as a main phase to an $\varepsilon$ martensite phase and reverse transformation of this transformation alternately occur to delay metal fatigue.

In addition, the metal material inevitably contains precipitates/inclusions such as a carbide, a nitride, an oxide, and a silicide, and particularly in the welded structure, these inevitable precipitates/inclusions are more likely to appear as a result of a weld solidification phenomenon. However, the inevitable precipitates/inclusions at a volume percentage of less than 0.5 vol% in total does not impair the effect such that the deformation-induced martensitic transformation from the $\gamma$ austenite phase as a main phase to an $\varepsilon$ martensite phase and reverse transformation of this transformation alternately occur to delay metal fatigue.

Furthermore, the deformation-induced $\varepsilon$ martensite may partly change to a deformation-induced $\alpha'$ martensite phase while the volume percentage sequentially increases according to sequential cyclic elastic-plastic deformation (secondary $\varepsilon \to \alpha'$ martensitic transformation). The deformation-induced $\alpha'$ martensite phase causes dislocation in the $\alpha'$ phase or the surrounding $\gamma$ phase by volume expansion due to a change in the crystal structure from the FCC structure to the BCC structure, and once transformed to the $\alpha'$ phase, the phase cannot be transformed to a $\gamma$ phase reversely by deformation only. Furthermore, the deformation-induced $\alpha'$ martensite phase has a property of causing a chain reaction of further deformation-induced $\alpha'$ martensitic transformation by the autocatalytic reaction to significantly work-harden the material by a rapid increase in the volume percentage. Furthermore, with respect to the alternate occurrence of the deformation-induced martensitic transformation from a $\gamma$ austenite phase to an $\varepsilon$ martensite phase and reverse transformation of this transformation, the deformation-induced $\alpha'$ martensite phase inhibits the repetitive motion of the Shockley partial dislocation present at the interface between the $\gamma$ austenite phase and the deformation-induced $\varepsilon$ martensite phase and reduces the fatigue life, but a volume percentage of the deformation-induced $\alpha'$ martensite phase in the fatigue fracture material of less than 12 vol% means that an increase of the $\alpha'$ phase due to a harmful chain reaction is not caused during cyclic deformation, and the deformation-induced $\alpha'$ martensite phase at such a low volume percentage does not impair the effect of delaying the metal fatigue of the welded structure.

The content of the deformation-induced α' martensite phase is not particularly limited as long as the volume percentage is less than the above-described value, and the base material, the weld heat-affected zone, and the weld metal may have a metal structure, immediately before fatigue fracture or at the time of fatigue fracture, including the deformation-induced α' martensite phase in an amount of 0 vol% or more and less than 12 vol%, 0 vol% or more and less than 10 vol%, 0 vol% or more and less than 8 vol%, 0 vol% or more and less than 7.5 vol%, 0 vol% or more and less than 6 vol%, 0 vol% or more and less than 5 vol%, 0 vol% or more and less than 4 vol%, 0 vol% or more and less than 3 vol%, 0 vol% or more and less than 2 vol%, or 0 vol% or more and less than 1 vol%. More specifically, the welded structure of the present embodiment preferably has a microstructure, after fatigue fracture by strain control cyclic tension-compression deformation with an amplitude of 1%, including the deformation-induced α' martensite phase at a volume percentage of 0 vol% or more and less than 12 vol%, more preferably 0 vol% or more and less than 6 vol%, still more preferably 0 vol% or more and less than 2 vol%, and still even more preferably 0 vol% or more and less than 1 vol%. The content of the deformation-induced α' martensite phase can be measured using a measuring apparatus such as a ferrite meter. The ferrite meter is an apparatus with which the intensity of magnetization is measured and thus the content of the α' martensite phase (the content of the α' martensite phase in a sample), which is a magnetic phase, can be measured simply.

The remaining γ austenite phase in the fatigue fracture material is a trace showing that the deformation-induced martensitic transformation from a γ austenite phase to an ε martensite phase and reverse transformation of this transformation alternately occur and effectively act to delay metal fatigue, and as the Gibbs free energy difference between the γ phase and the ε phase, $\Delta G^{\gamma \to \varepsilon}$, described below decreases, the volume percentage of the remaining γ austenite phase in the metal structure decreases in the base material, the weld heat-affected zone, and the weld metal immediately before fatigue fracture or at the time of fatigue fracture. When $\Delta G^{\gamma \to \varepsilon}$ is -150 J/mol or less, the ε martensite phase generated by the deformation-induced martensitic transformation from the γ austenite phase is less likely to be reversely transformed, and the base material, the weld heat-affected zone, and the weld metal have a metal structure, immediately before fatigue fracture or at the time of fatigue fracture, including the remaining γ austenite phase at a volume percentage of less than 10%. When the reversibility of the deformation-induced martensitic transformation is reduced as described above, the effect of delaying metal fatigue is reduced, so that in the welded structure, the number of cycles to fatigue by strain control cyclic tension-compression deformation with an amplitude of 1% is reduced to less than 4000.

If the above-described conditions are satisfied for the solidification mode of the weld metal, the microstructures of the base material, the weld heat-affected zone (HAZ), and the weld metal, and the deformation mechanism of the microstructure, the welded structure of the present embodiment is a long fatigue-life structure in which fatigue defects in the welded portion are suppressed. Therefore, the welded structure of the present embodiment can be preferably used as a seismic damping member for a building structure.

Hereinafter, an aspect will be described in which the welded structure of the present embodiment is used as a seismic damping member.

In the present aspect, the base material, the weld heat-affected zone, and the weld metal preferably consist of a component composition of, before the cyclic elastic-plastic deformation:

12 mass% ≤ Mn ≤ 18 mass%, 5 mass% ≤ Cr ≤ 15 mass%, 5 mass% ≤ Ni < 12 mass%, and 2 mass% ≤ Si ≤ 6 mass%, and 0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements,

with the balance being Fe and inevitable impurities,

wherein the component composition preferably satisfies:

a condition that a Gibbs free energy difference between a γ phase and an ε phase, $\Delta G^{\gamma \to \varepsilon}$, defined by Formulae 1 to 5 described below and thermodynamic parameters in Table 1 satisfies

$$-150 \text{ J/mol} < \Delta G^{\gamma \to \varepsilon} < 50 \text{ J/mol};$$

and

a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%Cr]eq/[\%Ni]eq \leq 1.96.$$

**Formula 1**

$$\Delta G^{\gamma \to \varepsilon} = \Delta G_{chem}^{\gamma \to \varepsilon} + \Delta G_{mag}^{\gamma \to \varepsilon}$$

(In formula 1, $\Delta G_{chem}^{\gamma \to \varepsilon}$ represents a term of chemical free energy, and $\Delta G_{mag}^{\gamma \to \varepsilon}$ represents a term of magnetic free energy.)

**Formula 2**

$$\Delta G_{chem}^{\gamma \to \varepsilon} = x_{Fe} G_{Fe}^{\gamma \to \varepsilon} + x_{Mn} G_{Mn}^{\gamma \to \varepsilon} + x_{Cr} G_{Cr}^{\gamma \to \varepsilon} + x_{Ni} G_{Ni}^{\gamma \to \varepsilon} + x_{Si} G_{Si}^{\gamma \to \varepsilon}$$

$$+ x_{Al} G_{Al}^{\gamma \to \varepsilon} + x_{Fe} x_{Mn} L_{FeMn}^{\gamma \to \varepsilon} + x_{Fe} x_{Cr} L_{FeCr}^{\gamma \to \varepsilon} + x_{Fe} x_{Ni} L_{FeNi}^{\gamma \to \varepsilon}$$

$$+ x_{Fe} x_{Si} L_{FeSi}^{\gamma \to \varepsilon} + x_{Fe} x_{Al} L_{FeAl}^{\gamma \to \varepsilon} + x_{Mn} x_{Si} L_{MnSi}^{\gamma \to \varepsilon} + x_{Mn} x_{Al} L_{MnAl}^{\gamma \to \varepsilon}$$

$$+ x_{Cr} x_{Ni} L_{CrNi}^{\gamma \to \varepsilon}$$

(In formula 2, $x_{Fe}$, $x_{Mn}$, $x_{Cr}$, $x_{Ni}$, $x_{Si}$, and $x_{Al}$ are the molar fractions of Fe, Mn, Cr, Ni, Si, and Al, $G_{Fe}^{\gamma \to \varepsilon}$、$G_{Mn}^{\gamma \to \varepsilon}$、$G_{Cr}^{\gamma \to \varepsilon}$、$G_{Ni}^{\gamma \to \varepsilon}$、$G_{Si}^{\gamma \to \varepsilon}$、$G_{Al}^{\gamma \to \varepsilon}$ are the partial molar free energies of Fe, Mn, Cr, Ni, Si, and Al, and $L_{FeMn}^{\gamma \to \varepsilon}$、$L_{FeCr}^{\gamma \to \varepsilon}$、$L_{FeNi}^{\gamma \to \varepsilon}$、$L_{FeSi}^{\gamma \to \varepsilon}$、$L_{FeAl}^{\gamma \to \varepsilon}$、$L_{MnSi}^{\gamma \to \varepsilon}$、$L_{MnAl}^{\gamma \to \varepsilon}$, and $L_{CrNi}^{\gamma \to \varepsilon}$ are the interaction parameters of Fe-Mn, Fe-Cr, Fe-Ni, Fe-Si, Fe-Al, Mn-Si, Mn-Al, Cr-Ni.)

**Formula 3**

$$\Delta G_{mag}^{\gamma \to \varepsilon} = RT \ln(\beta^{\varepsilon} + 1) f^{\varepsilon}\left(T/T_N^{\varepsilon}\right) - RT \ln(\beta^{\gamma} + 1) f^{\gamma}(T/T_N^{\gamma})$$

(in formula 3, R is a gas constant value R = 8.31 $JK^{-1}$ mo $l^{-1}$, T is a temperature, $\beta^{\gamma}$, and $\beta^{\varepsilon}$ are the magnetic moments of $\gamma$ phase and $\varepsilon$ phase, $T_N^{\gamma}$, and $T_N^{\varepsilon}$ are the paramagnetic-antiferromagnetic transition temperature (Neel point) of $\gamma$ phase and $\varepsilon$ phase, and $f^{\gamma}\left(T/T_N^{\gamma}\right)$, and $f^{\varepsilon}(T/T_N^{\varepsilon})$ are the functions obtained by formulae 4 and 5.)

**Formula 4**

$$f^{\gamma} = 1 - \left[\frac{79(T/T_N^{\gamma})^{-1}}{140 \cdot 0.28} + \frac{474}{497}\left(\frac{1}{0.28} - 1\right)\left(\frac{(T/T_N^{\gamma})^3}{6} + \frac{(T/T_N^{\gamma})^9}{135} + \frac{(T/T_N^{\gamma})^{15}}{600}\right)\right]\Big/ D \quad (T/T_N^{\gamma} \leq 1)$$

$$= -\left[\frac{(T/T_N^{\gamma})^{-5}}{10} + \frac{(T/T_N^{\gamma})^{-15}}{315} + \frac{(T/T_N^{\gamma})^{-25}}{1500}\right]\Big/ D \quad (T/T_N^{\gamma} > 1)$$

(In formula 4, D is a constant value, and D =2. 342456517.)

**Formula 5**

$$f^{\varepsilon} = 1 - \left[\frac{79(T/T_N^{\varepsilon})^{-1}}{140 \cdot 0.28} + \frac{474}{497}\left(\frac{1}{0.28} - 1\right)\left(\frac{(T/T_N^{\varepsilon})^3}{6} + \frac{(T/T_N^{\varepsilon})^9}{135} + \frac{(T/T_N^{\varepsilon})^{15}}{600}\right)\right]\Big/ D \quad (T/T_N^{\varepsilon} \leq 1)$$

$$= -\left[\frac{(T/T_N^{\varepsilon})^{-5}}{10} + \frac{(T/T_N^{\varepsilon})^{-15}}{315} + \frac{(T/T_N^{\varepsilon})^{-25}}{1500}\right]\Big/ D \quad (T/T_N^{\varepsilon} > 1)$$

(In formula 5, D is a constant value, and D =2.342456517.)

### Formula 6

Cr equivalent ([%Cr] eq) = [%Cr] + [%Mo] + 1.5 [%Si]

+0.5 [%Nb]

### Formula 7

Ni equivalent ([%Ni] eq) = [%Ni] + 30 [%C] + 0.28 [%Mn]

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \text{ (J/mol)} = -2243.38 + 4.309T$$

$$\Delta G_{Mn}^{\gamma \to \varepsilon} \text{ (J/mol)} = -1000 + 1.123T$$

$$\Delta G_{Cr}^{\gamma \to \varepsilon} \text{ (J/mol)} = 1370 - 0.163T$$

$$\Delta G_{Ni}^{\gamma \to \varepsilon} \text{ (J/mol)} = 1046 + 1.255T$$

$$\Delta G_{Si}^{\gamma \to \varepsilon} \text{ (J/mol)} = -560 - 8T$$

$$\Delta G_{Al}^{\gamma \to \varepsilon} \text{ (J/mol)} = 2800 + 5T$$

$$L_{FeMn}^{\gamma \to \varepsilon} \text{ (J/mol)} = 2873 - 717(x_{Fe} - x_{Mn})$$

$$L_{FeCr}^{\gamma \to \varepsilon} \text{ (J/mol)} = -1410(x_{Cr} - x_{Fe})$$

$$L_{FeNi}^{\gamma \to \varepsilon} \text{ (J/mol)} = 2095$$

$$L_{FeSi}^{\gamma \to \varepsilon} \text{ (J/mol)} = 2850 + 3520(x_{Fe} - x_{Si})$$

$$L_{FeAl}^{\gamma \to \varepsilon} \text{ (J/mol)} = 3326$$

$$L_{MnSi}^{\gamma \to \varepsilon} \text{ (J/mol)} = 1780$$

$$L_{MnAl}^{\gamma \to \varepsilon} \text{ (J/mol)} = -2510 - 12.845T + (13891 - 3.766T)(x_{Mn} - x_{Al})$$

$$+(83931 - 47T)(x_{Mn} - x_{Al})^2$$

$$\beta^{\gamma} = 0.7x_{Fe} + 0.62x_{Mn} + 0.62x_{Ni} - 0.8x_{Cr} - 0.64x_{Fe}x_{Mn} - 4x_{C}$$

$$\beta^{\varepsilon} = 0.62x_{Mn} - 4x_{C}$$

$$T_{N}^{\varepsilon} \text{ (K)} = 251.71 + 681x_{Mn} - 272x_{Cr} - 1800x_{Ni} - 1151x_{Al}$$

$$-1575x_{Si} - 1740x_{C}$$

$$T_{N}^{\varepsilon} \text{ (K)} = 580x_{Mn}$$

As described above, in the welded structure of the present embodiment, it is important that a state is created in which a change in the microstructure due to cyclic elastic-plastic deformation is reversibly promoted by bidirectional martensitic transformation between a $\gamma$ austenite phase and a deformation-induced $\varepsilon$ martensite phase. From experimental results obtained in monotonic tensile tests, it has been known that deformation-induced martensitic transformation from a $\gamma$ austenite phase to an $\varepsilon$ martensite phase is effective for improving the balance between the strength and the ductility in an alloy. For example, it has been reported that the product of the strength and the elongation of a Fe-Mn-Si-Al-based alloy can be significantly improved by the transformation-induced plasticity (TRIP) effect and the twinning-induced plasticity (TWIP) effect due to $\gamma$ twinning deformation (O. Grassel, G. Frommeyer, Effect of martensitic phase transformation and deformation twinning on mechanical properties of Fe-Mn-Si-Al steels, Mater Sci Technol 14(12) (1998) 1213-1217). For improving the balance between the strength and the ductility in an alloy by the TRIP/TWIP effect, the plastic deformation mechanism is predicted, using the value of the $\gamma$-phase stacking fault energy ($\Gamma_{SFE}$) that depends on the component composition of the alloy, as the condition for occurrence of the deformation-induced martensitic transformation and the $\gamma$ twinning deformation. Here, the stacking fault energy ($\Gamma_{SFE}$) is related to the Gibbs free energy difference between the $\gamma$ phase and the $\varepsilon$ phase, $\Delta G^{\gamma \to \varepsilon}$, with the following Formulae 8 to 9.

## Formula 8

$$\Gamma_{SFE} = 2\rho \Delta G^{\gamma \to \varepsilon} + 2\sigma^{\gamma/\varepsilon}$$

(In formula 8, $\rho$ is a surface molar density, and $\sigma^{\gamma/\varepsilon}$ is the interface entropy of $\gamma/\varepsilon$.)

## Formula 9

$$\rho = \frac{4}{\sqrt{3}} \frac{1}{a^2 N}$$

(In formula 9, a is the lattice constant of the $\gamma$ phase, and
N is Avogadro's number N = 6. 0 2 2 $\times$ 1 0$^{23}$.)

This relation is conventionally used to determine $\Delta G^{\gamma \to \varepsilon}$ by thermodynamic calculation, and $\Gamma_{SFE}$ is further determined to predict the plastic deformation mechanism and the mechanical characteristics of the alloy from empirical knowledge regarding the range of $\Gamma_{SFE}$ in which the deformation-induced martensitic transformation and the $\gamma$ twinning occur. For example, a new thermodynamic parameter set is proposed in Non Patent Literature 2 for calculation of $\Gamma_{SFE}$ of a Fe-Mn-Si-Al-C-based alloy, in Non Patent Literature 3 for calculation of $\Gamma_{SFE}$ of a Fe-Mn-Cr-Ni-Al-Si-N-based alloy, and in Non Patent Literature 4 for calculation of $\Gamma_{SFE}$ of a Fe-Mn-C-based alloy. Non Patent Literature 2, 3, and 4 describe that the condition under which monotonic tension causes deformation-induced martensitic transformation from a $\gamma$ austenite phase to an $\varepsilon$ martensite phase is that $\Gamma_{SFE} < 18$ mJ/m$^2$, and the condition under which monotonic tension causes $\gamma$ twinning deformation is that 12 mJ/m$^2 < \Gamma_{SFE} < 35$ mJ/m$^2$.

However, in the thermodynamic parameter sets proposed so far, an unknown parameter is optimized from the result of a monotonic tensile test in a specific component system, and therefore although a certain prediction accuracy is secured within the component range of the target component system, a highly general thermodynamic parameter set applicable to different component systems has not yet been established. The condition under which the deformation-induced martensitic transformation or the $\gamma$ twinning deformation is caused is largely based on knowledge in a specific component system, and different $\Gamma_{SFE}$ ranges are proposed by researchers.

In Non Patent Literature 1, the present inventors show that alternate occurrence of deformation-induced martensitic transformation from a $\gamma$ austenite phase to an $\varepsilon$ martensite phase and reverse transformation of this transformation plays an important role in prolongation of the fatigue life of a Fe-Mn-Cr-Ni-Si-based alloy, and a thermodynamic condition for the role is that the value of the stacking fault energy ($\Gamma_{SFE}$) is about 20 mJ/m$^2$. However, the calculated value of the stacking fault energy ($\Gamma_{SFE}$) depends on the thermodynamic parameter set used, and therefore there has not been a clear guideline for designing an alloy component further accurately to achieve a predetermined fatigue life.

Under such circumstances, as a result of intensive studies, the present inventors have selected thermodynamic parameters from those used in the model regarding a Fe-Mn-Si-Al-C-based alloy described in Non Patent Literature 2 and used in the model regarding a Fe-Mn-Cr-Ni-Al-Si-N-based alloy described in Non Patent Literature 3, and uniquely employed and combined thermodynamic parameters that are not used in Non Patent Literature 2 and 3, and thus the present inventors have found a new set of thermodynamic parameters (Table 1) with which the Gibbs free energy

difference $\Delta G^{\gamma\rightarrow\varepsilon}$ can be calculated that most closely matches the result of a cyclic tension-compression deformation test (low-cycle fatigue test) of a Fe-Mn-Cr-Ni-Si-Al-based alloy.

Table 1A below shows, in square brackets, the year of publication and the first author of each reference document with respect to the thermodynamic parameters shown in Table 1 above. Table 2A shows the thermodynamic parameters used in the present invention (symbol: N), the thermodynamic parameters used in the model described in Non Patent Literature 2 (symbol: P), and the thermodynamic parameters used in the model described in Non Patent Literature 3 (symbol: C) in comparison.

**Table 1A**

$$\Delta G_{Fe}^{\gamma\rightarrow\varepsilon} \text{ (J/mol)} = -2243.38 + 4.309T \qquad [\text{1991\_Dinsdale}]$$

$$\Delta G_{Mn}^{\gamma\rightarrow\varepsilon} \text{ (J/mol)} = -1000 + 1.123T \qquad [\text{1991\_Dinsdale}]$$

$$\Delta G_{Cr}^{\gamma\rightarrow\varepsilon} \text{ (J/mol)} = 1370 - 0.163T \qquad [\text{2011\_Curtze}]$$

$$\Delta G_{Ni}^{\gamma\rightarrow\varepsilon} \text{ (J/mol)} = 1046 + 1.255T \qquad [\text{1991\_Dinsdale}]$$

$$\Delta G_{Si}^{\gamma\rightarrow\varepsilon} \text{ (J/mol)} = -560 - 8T \qquad [\text{2008\_Dumay}]$$

$$\Delta G_{Al}^{\gamma\rightarrow\varepsilon} \text{ (J/mol)} = 2800 + 5T \qquad [\text{2008\_Dumay}]$$

$$L_{FeMn}^{\gamma\rightarrow\varepsilon} \text{ (J/mol)} = 2873 - 717(x_{Fe}-x_{Mn}) \qquad [\text{2008\_Dumay}]$$

$$L_{FeCr}^{\gamma\rightarrow\varepsilon} \text{ (J/mol)} = -1410(x_{Cr}-x_{Fe}) \quad [\text{1987\_Andersson, 1990\_Frisk}]$$

$$L_{FeNi}^{\gamma\rightarrow\varepsilon} \text{ (J/mol)} = 2095 \qquad [\text{1999\_Yakubutsov}]$$

$$L_{FeSi}^{\gamma\rightarrow\varepsilon} \text{ (J/mol)} = 2850 + 3520(x_{Fe}-x_{Si}) \qquad [\text{2008\_Dumay}]$$

$$L_{FeAl}^{\gamma\rightarrow\varepsilon} \text{ (J/mol)} = 3326 \qquad [\text{1990\_Yang}]$$

$$L_{MnSi}^{\gamma\rightarrow\varepsilon} \text{ (J/mol)} = 1780 \qquad [\text{1993\_Forsberg, 1997\_Li}]$$

$$L_{MnAl}^{\gamma\rightarrow\varepsilon} \text{ (J/mol)} = -2510 - 12.845T + (13891 - 3.766T)(x_{Mn}-x_{Al})$$
$$+ (83931 - 47T)(x_{Mn}-x_{Al})^2 \qquad [\text{1993\_Forsberg,}$$
$$\text{1997\_Li}]$$

$$\beta^{\gamma} = 0.7x_{Fe} + 0.62x_{Mn} + 0.62x_{Ni} - 0.8x_{Cr} - 0.64x_{Fe}x_{Mn} - 4x_C$$
$$[\text{2011\_Curtze}]$$

$$\beta^{\varepsilon} = 0.62x_{Mn} - 4x_C \qquad [\text{2008\_Dumay}]$$

$$T_N^{\varepsilon} \text{ (K)} = 251.71 + 681x_{Mn} - 272x_{Cr} - 1800x_{Ni} - 1151x_{Al}$$
$$-1575x_{Si} - 1740x_C \qquad [\text{2008\_Dumay}]$$

$$T_N^{\varepsilon} \text{ (K)} = 580x_{Mn} \qquad [\text{2008\_Dumay}]$$

**Table 2A**

$$\Delta G_{Fe}^{\gamma \to \varepsilon} \text{ (J/mol)} = -2243.38 + 4.309T \qquad [1991\_Dinsdale] \text{ NCP}$$

$$\Delta G_{Mn}^{\gamma \to \varepsilon} \text{ (J/mol)} = -1000 + 1.123T \qquad [1991\_Dinsdale] \text{ NCP}$$

$$\Delta G_{Cr}^{\gamma \to \varepsilon} \text{ (J/mol)} = 1370 - 0.163T \qquad [2011\_Curtze] \text{ NC}$$

$$\Delta G_{Ni}^{\gamma \to \varepsilon} \text{ (J/mol)} = 1046 + 1.255T \qquad [1991\_Dinsdale] \text{ NC}$$

$$\Delta G_{Si}^{\gamma \to \varepsilon} \text{ (J/mol)} = -560 - 8T \qquad [2008\_Dumay] \text{ NCP}$$

$$\Delta G_{Al}^{\gamma \to \varepsilon} \text{ (J/mol)} = 2800 + 5T \qquad [2008\_Dumay] \text{ NC}$$

$$\Delta G_{Al}^{\gamma \to \varepsilon} \text{ (J/mol)} = 5481.04 - 1.799T \qquad [1991\_Dinsdale] \text{ P}$$

$$L_{FeMn}^{\gamma \to \varepsilon} \text{ (J/mol)} = 2873 - 717(x_{Fe} - x_{Mn}) \qquad [2008\_Dumay] \text{ NC}$$

$$L_{FeMn}^{\gamma \to \varepsilon} \text{ (J/mol)} = 7692.59 - 1.029T$$
$$+ (-14012.46 + 13.884T)(x_{Fe} - x_{Mn})$$
$$[1989\_Huang, 2010\_Nakano] \text{ P}$$

$$L_{FeCr}^{\gamma \to \varepsilon} \text{ (J/mol)} = 2095 \qquad [1999\_Yakubutsov] \text{ C}$$

$$L_{FeCr}^{\gamma \to \varepsilon} \text{ (J/mol)} = -1410(x_{Cr} - x_{Fe}) \, [1987\_Andersson, 1990\_Frisk] \text{ N}$$

$$L_{FeNi}^{\gamma \to \varepsilon} \text{ (J/mol)} = 2095 \qquad [1999\_Yakubutsov] \text{ NC}$$

$$L_{FeSi}^{\gamma \to \varepsilon} \text{ (J/mol)} = 2850 + 3520(x_{Fe} - x_{Si}) \qquad [2008\_Dumay] \text{ NC}$$

$$L_{FeSi}^{\gamma \to \varepsilon} \text{ (J/mol)} = 19099 - 48950(x_{Fe} - x_{Si}) + 33667(x_{Fe} - x_{Si})^2$$
$$[1991\_Lacaze, 1998\_Cotes, 1993\_Forsberg] \text{ P}$$

$$L_{FeAl}^{\gamma \to \varepsilon} \text{ (J/mol)} = 3328 \qquad [1990\_Yang] \text{ NP}$$

$$L_{MnSi}^{\gamma \to \varepsilon} \text{ (J/mol)} = 1780 \qquad [1993\_Forsberg, 1997\_Li] \text{ NP}$$

$$L_{MnAl}^{\gamma \to \varepsilon} \text{ (J/mol)} = -2510 - 12.845T + (13891 - 3.766T)(x_{Mn} - x_{Al})$$
$$+ (83931 - 47T)(x_{Mn} - x_{Al})^2 \qquad [1993\_Forsberg,$$
$$1997\_Li] \text{ NP}$$

$$L_{CrNi}^{\gamma \to \varepsilon} \text{ (J/mol)} = 4190 \qquad [1999\_Yakubutsov] \text{ (Not used in N) C}$$

$$\beta^{\gamma} = 0.7x_{Fe} + 0.62x_{Mn} + 0.62x_{Ni} - 0.8x_{Cr} - 0.64x_{Fe}x_{Mn} - 4x_C$$
$$[2011\_Curtze] \text{ NC}$$

$$\beta^{\varepsilon} = 0.62x_{Mn} - 4x_C \qquad [2008\_Dumay] \text{ NC}$$

(continued)

$$T_N^\varepsilon \; (K) = 251.71 + 681x_{Mn} - 272x_{Cr} - 1800x_{Ni} - 1151x_{Al}$$
$$-1575x_{Si} - 1740x_C \qquad [2008\_Dumay] \; NC$$

$$T_N^\varepsilon \; (K) = 580x_{Mn} \qquad [2008\_Dumay] \; NC$$

The information of the reference documents listed in Tables 1A and 2A is as follows.

[1991_Dinsdale] A.T. Dinsdale, Sgte Data for Pure Elements, Calphad 15(4) (1991) 317-425.
[2008_Dumay] A. Dumay, J.P. Chateau, S. Allain, S. Migot, O. Bouaziz, Influence of addition elements on the stacking-fault energy and mechanical properties of an austenitic Fe-Mn-C steel, Mater Sci Eng A, 483-84 (2008) 184-187.
[2011_Curtze] S. Curtze, V.T. Kuokkala, A. Oikari, J. Talonen, H. Hanninen, Thermodynamic modeling of the stacking fault energy of austenitic steels, Acta Mater, 59(3) (2011) 1068-1076.
[1989_Huang] W.M. Huang, An Assessment of the Fe-Mn System, Calphad 13(3) (1989) 243-252.
[2010_Nakano] J. Nakano, P.J. Jacques, Effects of the thermodynamic parameters of the hcp phase on the stacking fault energy calculations in the Fe-Mn and Fe-Mn-C systems, Calphad 34(2) (2010) 167-175.
[1991_Lacaze] J. Lacaze, B. Sundman, An assessment of the Fe-C-Si system, MTA 22(10) (1991) 2211-2223.
[1998_Cotes] S. Cotes, A.F. Guillermet, M. Sade, Phase stability and fcc/hcp martensitic transformation in Fe-Mn-Si alloys: Part II. Thermodynamic modelling of the driving forces and the M-s and A(s) temperatures, J Alloy Compd 280(1-2) (1998) 168-177.
[1993_Forsberg] A. Forsberg, J. Ågren, Thermodynamic evaluation of the Fe-Mn-Si system and the $\gamma/\varepsilon$ martensitic transformation, J Phase Equil 14(3) (1993) 354-363.
[1999_Yakubtsov] I.A. Yakubtsov, A. Ariapour, D.D. Perovic, Effect of nitrogen on stacking fault energy of f.c.c. iron-based alloys, Acta Mater 47(4) (1999) 1271-1279.
[1987_Andersson] J.-O. Andersson, B. Sundman, Thermodynamic properties of the Cr-Fe system, Calphad 11(1) (1987) 83-92.
[1990_Frisk] K. Frisk, A thermodynamic evaluation of the Cr-Fe-N system, MTA 21(9) (1990) 2477-2488.
[1990_Yang] W.S. Yang, C.M. Wan, The Influence of Aluminum Content to the Stacking-Fault Energy in Fe-Mn-Al-C Alloy System, J Mater Sci 25(3) (1990) 1821-1823.
[1997_Li] L. Li, T.Y. Hsu, Gibbs free energy evaluation of the fcc(gamma) and hcp(epsilon) phases in Fe-Mn-Si alloys, Calphad 21(3) (1997) 443-448.

From the Gibbs free energy difference $\Delta G^{\gamma \to \varepsilon}$ calculated with the thermodynamic parameter set in the present invention, the value of the stacking fault energy ($\Gamma_{SFE}$) of the $\gamma$ phase can be calculated using the relation in the above-described Formula 8. Here, as the $\gamma/\varepsilon$ interface entropy ($\sigma^{\gamma/\varepsilon}$) necessary for this calculation, the following Formula 10 described in Non Patent Literature 2 is preferably used.

### Formula 10

$$\sigma^{\gamma/\varepsilon} \; (J/m^2) = 0.00001(2\rho(\Delta G_{chem} + \Delta G_{mag}))^2 + 0.0095$$

By converting the Gibbs free energy difference between the $\gamma$ phase and the $\varepsilon$ phase, $\Delta G^{\gamma \to \varepsilon}$, at which the fatigue life (that is, the number of cycles to fracture by strain control cyclic tension-compression deformation with an amplitude of 1%) is 4000 or more into the stacking fault energy ($\Gamma_{SFE}$) of the $\gamma$ phase using the above-described Formulae 8 to 10, the following condition is obtained.

$$10 \; mJ/m^2 < \Gamma_{SFE} < 22.5 \; mJ/m^2$$

That is, according to the thermodynamic parameter set of the present invention, the stacking fault energy ($\Gamma_{SFE}$), which is a thermodynamic parameter conventionally used for prediction of a plastic deformation mode in monotonic tension, can be used to predict a value range in which a predetermined fatigue life is obtained. This value includes the value regarding a Fe-Mn-Cr-Ni-Si-based alloy disclosed in Non Patent Literature 1 (20 mJ/m$^2$), and the alloy component range can be accurately predicted. Furthermore, the present inventors have confirmed that the thermodynamic parameter set also well coincides with the result of a cyclic tension-compression deformation test (low-cycle fatigue test) of an alloy other than the Fe-Mn-Cr-Ni-Si-Al-based alloy, specifically, a Fe-Mn-Cr-Ni-Si-based alloy. Therefore, it can be said that the thermodynamic parameter set in the present invention has high generality applicable to a plurality of component systems. In addition, according to the thermodynamic parameter set in the present invention, the temperature dependence and the composition dependence on the fatigue life of a plurality of component systems (more specifically, a Fe-Mn-Cr-Ni-Si-based alloy, a Fe-Mn-Si-based alloy, a Fe-Mn-Si-Al-based alloy, a Fe-Mn-Si-Cr-based alloy, and the like) can be equivalently evaluated, and from this viewpoint, the thermodynamic parameter set is novel and superior to a conventional model.

Specifically, the present inventors have performed low-cycle fatigue tests on alloys having component compositions shown below under the same procedure and conditions as in Examples described below to measure the fatigue life (number of cycles to fracture, Nf) under various temperature conditions (total number of tests: 23), and have found a correlation such that when the value of $\Delta G^{\gamma \to \varepsilon}$ falls within the range of -150 J/mol < $\Delta G^{\gamma \to \varepsilon}$ < 50 J/mol, the value of Nf is 4000 or more. In the following component compositions, the unit of each number is mass%, and for example, the expression "15Mn" means that the content of Mn is in "the range of 14.5 mass% or more and less than 15.5 mass%". The same applies to the contents of elements other than Mn.

(Fe-Mn-Cr-Ni-Si-based alloy)

Component composition: Fe-15Mn-10Cr-8Ni-4Si
Temperature conditions: -20°C, 0°C, 25°C, 40°C, 60°C, 80°C, 100°C, 120°C

(Fe-Mn-Si-based alloy, Fe-Mn-Si-Al-based alloy)

Component compositions:

Fe-30Mn-6Si
Fe-30Mn-5Si-1Al
Fe-30Mn-4Si-2Al
Fe-30Mn-3Si-3Al
Fe-30Mn-2Si-4Al
Fe-30Mn-1Si-5Al
Fe-30Mn-6Al
Temperature condition: 25°C

(Fe-Mn-Si-Cr-based alloy)

Component composition: Fe-28Mn-6Si-5Cr
Temperature conditions: -50°C, 0°C, 25°C, 50°C, 100°C, 150°C, 200°C, 250°C

From the above, in the present aspect, the condition of the Gibbs free energy difference between the $\gamma$ phase and the $\varepsilon$ phase, $\Delta G^{\gamma \to \varepsilon}$, is set to -150 J/mol < $\Delta G^{\gamma \to \varepsilon}$ < 50 J/mol so that the fatigue life (that is, the number of cycles to fracture by strain control cyclic tension-compression deformation with an amplitude of 1%) is 4000 or more.

Hereinafter, each component element of the steel material and the welding material included in the welded structure of the present aspect will be described.

Manganese (Mn) is an essential element for deformation-induced martensitic transformation from a $\gamma$ austenite phase to an $\varepsilon$ martensite phase. Mn acts to stabilize a $\gamma$ austenite phase the most, secondly stabilize a deformation-induced $\varepsilon$ martensite phase, and strongly suppress formation of a deformation-induced $\alpha'$ martensite phase. Therefore, by adjusting the content of Mn, the $\gamma$ austenite phase is stabilized, the deformation-induced martensitic transformation from a $\gamma$ austenite phase to an $\varepsilon$ martensite phase and reverse transformation of this transformation are alternately caused at the time of cyclic elastic-plastic deformation of the welded structure, and formation of a deformation-induced $\alpha'$ martensite phase is suppressed, and thus a fatigue characteristic can be improved.

Mn can be partly replaced by Nickel (Ni) and chromium (Cr) so that Ni and Cr act to stabilize a $\gamma$ austenite

phase and cause deformation-induced martensitic transformation from a γ austenite phase to an ε martensite phase and reverse transformation of this transformation alternately at the time of cyclic elastic-plastic deformation of the welded structure. In this aspect, from the viewpoint of the steel material and the welding material included in the welded structure, Cr and Ni are preferably included as alternative elements of Mn in order to reduce the melting cost. In addition, aluminum (Al), which is known to have an effect of improving a damping characteristic of a conventional Fe-Mn-Si shape memory alloy, may also be added as an alternative element of Mn as necessary.

The effect of Mn, Cr, Ni, and Al on the cyclic elastic-plastic deformation mechanism of the welded structure can be represented by the mass% of Mn that has the same effect. In the present aspect, this mass% is defined as a Mn equivalent ([%Mn]eq), and the Mn equivalent is represented by the following formula using the content (mass%) of each component element.

$$\text{Mn equivalent ([\%Mn]eq)} = [\%Mn] + [\%Cr] + 2[\%Ni] + 5[\%Al]$$

In the formula, [%Mn], [%Cr], [%Ni], and [%Al] mean the mass% of Mn, Cr, Ni, and Al in the component composition, respectively.

In the present aspect, the condition represented by the following formula is preferably satisfied as the range of the Mn equivalent for development of the bidirectional deformation-induced martensitic transformation between a γ austenite phase and an ε martensite phase.

$$36 < [\%Mn]eq < 50$$

When the Mn equivalent is 36 or less, the ε martensite phase has very high thermodynamic stability, so that the ε martensite phase once generated through deformation-induced transformation cannot be reversely transformed to a γ austenite phase even if deformed in the reverse direction subsequently. As a result, the volume percentage of the deformation-induced ε martensite phase monotonously increases due to the cyclic elastic-plastic deformation, and the crack occurrence probability and the crack extension speed increase at a site where the formed deformation-induced ε martensite phases collide with each other, so that the number of cycles to fracture decreases.

When the Mn equivalent is 30 or less, during production of the steel material included in the welded structure, an initial ε martensite phase is already formed at a volume percentage of 10 vol% or more at the time of cooling from the solution heat treatment temperature to room temperature, and becomes an inhibiting factor for formation of a deformation-induced ε martensite phase in the welded structure, so that the number of cycles to fracture decreases.

When the Mn equivalent is 50 mass% or more, the γ austenite phase is stabilized so strongly that a deformation-induced ε martensite phase is not formed.

Patent Literature 1 discloses that the condition for achieving a number of cycles to fracture of 2000 or more in a Fe-Mn-(Cr, Ni)-Si-based alloy is that the range of the Mn equivalent satisfies 37 < [%Mn]eq < 45. Therefore, in the welded structure of the present embodiment, when a condition is set with the Mn equivalent as the first index for achieving a number of cycles to fracture by strain control cyclic tension-compression deformation with an amplitude of 1% of 4000 or more, the range of the Mn equivalent to be satisfied is naturally expected to be narrower than the range described in Patent Literature 1. However, as a result of experiments by the inventors, as specifically shown in Examples described below, an alloy obtained by changing the contents of Cr and Ni while the content of Mn is set to 15 mass%, and an alloy obtained by changing the content of Mn around 15 mass% (Fe-Mn-Cr-Ni-Si-based alloy) showed a fatigue life of 4000 cycles or more with the Mn equivalent in a range wider than that in the characteristic prediction described in Patent Literature 1. This result indicates that the number of cycles to fracture, Nf, of a multicomponent alloy nonlinearly depends on the component composition and therefore the component range in which the Mn equivalent can be used for linear prediction is limited. That is, it has been found that since the formula of the Mn equivalent and the condition of the Mn equivalent range for obtaining a long life have been found mainly focusing on the influence of the contents of Mn and Al in the component composition of an alloy, the prediction accuracy is difficult to ensure in the component range of the present invention in which Al is not an essential component element and the change in the contents of Mn, Cr, and Ni are mainly focused on. Therefore, as a result of intensive research, the inventors have developed a fatigue life prediction technique by Gibbs free energy calculation using a new thermodynamic parameter set, and have found that the prediction accuracy can be further improved by using this technique for a first index and further combining the condition of the Mn equivalent as necessary, and the present invention has been completed.

From the above, in the present aspect, the range of the Mn equivalent is preferably 36 < [%Mn]eq < 50, and more preferably 38 < [%Mn]eq < 44.

Silicon (Si) has almost no effect on the Mn equivalent, but if Si is included, the reversibility of the bidirectional martensitic transformation between a γ austenite phase and an ε martensite phase can be improved to improve the number of cycles to fracture. Meanwhile, if Si is excessively included, a problem may occur such as a decrease in the number of cycles to fracture or an increase in the stress amplitude of cyclic elastic-plastic deformation due to significant hardening of the alloy (weld metal or the like).

Regarding the content of Mn, Cr, Ni, and Si, it is important to adjust the balance between the total amount of Mn and Ni as austenite stabilizing elements and the total amount of Cr and Si as ferrite stabilizing elements so that the base material, the weld heat-affected zone, and the weld metal have a metal structure, before cyclic elastic-plastic deformation, including a $\gamma$ austenite phase as a main phase. As the ferrite stabilizing element concentration increases and the austenite stabilizing element concentration decreases, the $\delta$ ferrite phase is more likely to be formed, and when both the ferrite stabilizing element concentration and the austenite stabilizing element concentration are low, a deformation-induced $\alpha'$ martensite phase is likely to be formed.

In the present aspect, the component composition of the welded structure is adjusted so that the component composition of the weld metal is in the FA solidification mode. The characteristics of the weld metal can be grasped by plotting point coordinates of a Cr equivalent ([%Cr]eq) defined by the following Formula 6 and a Ni equivalent ([%Ni]eq) defined by the following Formula 7, ([%Cr]eq, [%Ni]eq), on a Schaeffler diagram on the basis of the component composition of the weld metal.

Formula 6

$$\text{Cr equivalent ([%Cr]eq)} = [\%Cr] + [\%Mo] + 1.5[\%Si] + 0.5[\%Nb]$$

Formula 7

$$\text{Ni equivalent ([%Ni]eq)} = [\%Ni] + 30[\%C] + 0.28[\%Mn]$$

In Formulae 6 and 7, [%Cr], [%Mo], [%Si], [%Nb], [%Ni], [%C], and [%Mn] mean mass% of Cr, Mo, Si, Nb, Ni, C, and Mn, respectively.

In the present aspect, in order for the weld metal to have a component composition in the FA solidification mode, the ratio of the Cr equivalent to the Ni equivalent, ([%Cr]eq/[%Ni]eq), satisfies the condition of 1.33 < [%Cr]eq/[%Ni]eq ≤ 1.96.

In the present description, the effective digit number of the value of the ratio of the Cr equivalent to the Ni equivalent ([%Cr]eq/[%Ni]eq) is three. However, when the value is less than zero, the value is rounded off to two decimal place.

In Examples described below, an example is shown in which point coordinates ([%Cr]eq, [%Ni]eq) are plotted on a Schaeffler diagram on the basis of the component composition of each alloy.

In addition to the above-described conditions, in the present aspect, the content of each component element of Mn, Cr, Ni, and Si is limited by, for example, limitation in manufacture of the steel material and the welding material included in the welded structure. Details will be described below.

<Mn>

Manganese (Mn) is an essential element to stabilize a $\gamma$ austenite phase and cause deformation-induced martensitic transformation from a $\gamma$ austenite phase to an $\varepsilon$ martensite phase and reverse transformation of this transformation alternately at the time of cyclic elastic-plastic deformation of the welded structure. In the present aspect, the content of Mn is set to 18 mass% or less in consideration of the content of Cr and Ni described below.

If Mn is excessively included, melting at a practicable cost is difficult from the viewpoint of the steel material and the welding material included in the welded structure because of a decrease in the Mn yield due to evaporation and oxidation of Mn, a reaction with a melting furnace refractory, and the like that are unavoidable. Therefore, by setting the content of Mn to 18 mass% or less, the melting cost can be reduced, and an alloy can be produced by arc furnace melting suitable for mass production.

Meanwhile, if the content of Mn is less than 12 mass%, formation of a deformation-induced $\alpha'$ martensite phase harmful to the fatigue characteristic cannot be avoided regardless of how the content of Cr and Ni is adjusted. Therefore, in the present aspect, the content of Mn is preferably set to at least 12 mass% or more.

From the above, in the present aspect, the content of Mn is in the range of 12 mass% ≤ Mn ≤ 18 mass%.

<Cr>

Chromium (Cr) is an element that replaces Mn to act to cause deformation-induced martensitic transformation from a $\gamma$ austenite phase to an $\varepsilon$ martensite phase and reverse transformation of this transformation alternately at the time of cyclic elastic-plastic deformation of the welded structure for improving the fatigue characteristic of the welded structure of the present aspect. Cr further contributes to improvement in the corrosion resistance and the high-temperature oxidation resistance. However, if the content of Cr is more than 15 mass%, it becomes difficult to suppress formation of a deformation-induced $\alpha'$ martensite phase regardless of how other components are adjusted. Furthermore, it becomes difficult to smelt an alloy from the viewpoint of the steel material and the welding material included in the welded structure because of an intermetallic compound having a low melting point formed with Si.

From the above, in the present aspect, the content of Cr is in the range of 5 mass% $\leq$ Cr $\leq$ 15 mass%.

<Ni>

Nickel (Ni) is an element that replaces Mn to act to stabilize a $\gamma$ austenite phase and cause deformation-induced martensitic transformation from a $\gamma$ austenite phase to an $\varepsilon$ martensite phase and reverse transformation of this transformation alternately at the time of cyclic elastic-plastic deformation of the welded structure for improving the fatigue characteristic of the welded structure of the present aspect. In particular in the present aspect, the content of Mn is set to 18 mass% or less, and therefore unless 5 mass% or more of Ni as an austenite stabilizing element is included, a microstructure including a $\gamma$ austenite phase as a main phase cannot be obtained as a state before elastic-plastic deformation.

Meanwhile, if the content of Ni is 12 mass% or more, the hot workability of an alloy deteriorates from the viewpoint of the steel material and the welding material included in the welded structure because of an intermetallic compound having a low melting point formed with Si. From the viewpoint of material cost, the content of Ni, which is an expensive element, is more preferably less than 10 mass%.

From the above, in the present aspect, the content of Ni is in the range of 5 mass% $\leq$ Ni < 12 mass%, and more preferably 5 mass% $\leq$ Ni < 10 mass%.

<Si>

Silicon (Si) is an essential element necessary for imparting the reversibility to repetitive motion of Shockley partial dislocation and improving the fatigue life, and the content at which the effect can be obtained is 2 mass% $\leq$ Si $\leq$ 6 mass%. If the content of Si is less than 2 mass%, the effect of improving the reversibility is insufficient, and if the content of Si is more than 6 mass%, a brittle silicide is formed to reduce the fatigue life.

As described above, in the present aspect, in order to set the number of cycles to fracture by strain control cyclic tension-compression deformation with an amplitude of 1% to 4000 or more, the content of Si is set within the range of 2 mass% $\leq$ Si $\leq$ 6 mass%. If the content of Si satisfies this range, the steel material itself included in the welded structure can achieve a number of cycles to fracture of 4000 or more.

<Others>

In the present aspect, aluminum (Al), cobalt (Co), copper (Cu), niobium (Nb), tantalum (Ta), vanadium (V), titanium (Ti), and molybdenum (Mo) may be contained in a total amount of 1 mass% or less and carbon (C), nitrogen (N), and boron (B) may be contained in a total amount of 0.2 mass% or less, as necessary, as optional elements added in a trace amount for adjusting the characteristics of an iron-based alloy, or as inevitably contained impurity elements.

As described above, in the welded structure of the present aspect, the base material, the weld heat-affected zone, and the weld metal are to have a metal structure, before cyclic elastic-plastic deformation, including a $\gamma$ austenite phase as a main phase, and a $\delta$ ferrite phase and an initial $\varepsilon$ martensite phase may be included. Actually, in an alloy obtained by adjusting the components to a state in which the above-described deformation is likely to cause deformation-induced martensitic transformation from a $\gamma$ austenite phase to an $\varepsilon$ martensite phase, a $\delta$ ferrite phase is likely to be formed, at the time of cooling after welding, at a site where Cr or Si is concentrated by component segregation during weld solidification, and an initial $\varepsilon$ martensite phase may be unintentionally formed at a site where Mn or Ni is concentrated by component segregation during weld solidification, due to cooling after welding, a subsequent temperature change in the environment, an influence of working, or the like.

These $\delta$ ferrite phase and initial $\varepsilon$ martensite phase do not contribute to alternate occurrence, which is effective for delaying metal fatigue, of deformation-induced martensitic transformation from a $\gamma$ austenite phase to an $\varepsilon$ martensite phase and reverse transformation of this transformation, but when the volume percentage of the total of the $\delta$ ferrite phase and the initial $\varepsilon$ martensite phase is less than 14.5 vol%, the $\delta$ ferrite phase and the initial $\varepsilon$ martensite phase do

not inhibit bidirectional martensitic transformation between a γ austenite phase as a main phase and a deformation-induced ε martensite phase.

Meanwhile, the initial ε martensite phase unintentionally formed usually has a crystallographic orientation different from that of a deformation-induced ε martensite phase that subsequently appears by cyclic elastic-plastic deformation, and thus serves as a barrier against the growth of a deformation-induced ε martensite phase. Therefore, the volume percentage of the initial ε martensite phase is preferably 10 vol% or less.

The cyclic elastic-plastic deformation of the welded structure of the present aspect is mainly carried out by alternate occurrence of deformation-induced martensitic transformation from a γ austenite phase to an ε martensite phase and reverse transformation of this transformation. Specifically, when the welded structure is subjected to tension-compression elastic-plastic deformation, the ε martensite phase induced during the tensile deformation is reversely transformed to a γ austenite phase when the deformation direction is reversed to the compression direction.

The compressive deformation generates a new ε martensite phase having a crystal orientation different from that at the time of the tensile deformation simultaneously with reverse transformation of the tension-induced ε martensite phase. This compression-induced ε martensite phase is also reversely transformed to a γ austenite phase when the deformation is reversed to tension again. As described above, the tension-induced ε and the compression-induced ε are alternately generated and eliminated repeatedly by cyclic tension-compression, and thus the Shockley partial dislocation present at the interface between the γ austenite phase and the deformation-induced ε martensite phase reciprocates without accumulation of metal fatigue damage, and the state of reversible bidirectional martensitic transformation is maintained during cyclic elastic-plastic deformation because of the small cumulative increase in the volume percentage of the deformation-induced ε martensite phase due to cyclic tension-compression elastic-plastic deformation. For these reasons, the welded structure of the present aspect has an excellent fatigue characteristic.

However, as the strain amplitude and the number of cycles increase, the volume percentage of the deformation-induced ε martensite phase gradually increases, and when the volume percentage becomes 90 vol% or more, the crack occurrence probability and the crack extension speed increase to cause fracture in some cases. Therefore, in order to set the number of cycles to fracture by strain control cyclic tension-compression deformation with an amplitude of 1% to 4000 or more, the volume percentage of the deformation-induced ε martensite after 4000 cycles of deformation is preferably set to less than 90 vol%.

As a result of the gradual increase in the volume percentage of the deformation-induced ε martensite phase accompanying the increase in the strain amplitude and the number of cycles, a deformation-induced α' martensite phase may be formed at a site where deformation-induced ε martensite phases having different crystal orientations intersect (secondary ε → α' martensitic transformation). The deformation-induced α' martensite phase causes dislocation in the α' phase or the surrounding γ phase by volume expansion due to a change in the crystal structure from the FCC structure to the BCC structure, and once transformed to the α' phase, the phase cannot be transformed to a γ phase reversely by deformation only. Furthermore, the deformation-induced α' martensite phase has a property of causing a chain reaction of further deformation-induced α' martensitic transformation by the autocatalytic reaction to significantly work-harden the material by a rapid increase in the volume percentage, leading to not only a decrease in the seismic damping member performance due to an increase in the stress level, but also a decrease in the number of cycles to fracture. Furthermore, with respect to the alternate occurrence of the deformation-induced martensitic transformation from a γ austenite phase to an ε martensite phase and reverse transformation of this transformation, the deformation-induced α' martensite phase inhibits the repetitive motion of the Shockley partial dislocation present at the interface between the γ austenite phase and the deformation-induced ε martensite phase and reduces the fatigue life, but a volume percentage of the deformation-induced α' martensite phase in the fatigue fracture material of less than 12 vol% means that an increase of the α' phase due to a harmful chain reaction is not caused during cyclic deformation, and the deformation-induced α' martensite phase at such a low volume percentage does not impair the effect of delaying the metal fatigue of the welded structure. Therefore, the volume percentage of the deformation-induced α' martensite phase is to be less than 12 vol%.

The welded structure of the present aspect is intended to be used as a seismic damping member in a damping device for a large building structure such as a skyscraper or a large-scale exhibition hall, and therefore the final number of cycles to fracture or buckling by strain control cyclic tension-compression deformation with an amplitude of 1% is set to 4000 or more.

In the welded structure of the present aspect, the base material, the weld heat-affected zone, and the weld metal may have a substantially identical component composition before cyclic elastic-plastic deformation.

In the present description, the phrase that "the base material, the weld heat-affected zone, and the weld metal have a substantially identical component composition" means that the difference in content of each component element is within a range of ±0.5 mass%, more preferably within a range of ±0.3 mass%, still more preferably within a range of ±0.25 mass%, and particularly preferably within a range of ±0.2 mass%.

In the welded structure of the present aspect, the base material, the weld heat-affected zone, and the weld metal may have different component compositions before cyclic elastic-plastic deformation.

In the present description, the phrase that "the base material, the weld heat-affected zone, and the weld metal have different component compositions" means that the difference in content of one or more component elements is more than ±0.5 mass%.

[Fe-Mn-Cr-Ni-Si-based alloy]

The alloy steel according to an embodiment of the present invention is an alloy to be used in the welded structure of the present embodiment described above, and is a Fe-Mn-Cr-Ni-Si-based alloy consisting of Mn, Cr, Ni, and Si as component elements with the balance being Fe and inevitable impurities.

The Fe-Mn-Cr-Ni-Si-based alloy according to the present embodiment (hereinafter, also referred to as "alloy of the present embodiment") has a component composition that satisfies the component composition conditions, before cyclic elastic-plastic deformation, of the base material, the weld heat-affected zone, and the weld metal in the welded structure of the above-described present embodiment.

That is, the alloy of the present embodiment preferably consists of a component composition of:
12 mass% $\leq$ Mn $\leq$ 18 mass%, 5 mass% $\leq$ Cr $\leq$ 15 mass%, 5 mass% $\leq$ Ni < 12 mass%, and 2 mass% $\leq$ Si $\leq$ 6 mass%, and 0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements,
with the balance being Fe and inevitable impurities,
wherein the component composition preferably satisfies:
a condition that a Gibbs free energy difference between a $\gamma$ phase and an $\varepsilon$ phase, $\Delta G^{\gamma \to \varepsilon}$, defined by Formulae 1 to 5 described below and thermodynamic parameters in Table 1 satisfies

$$-150 \text{ J/mol} < \Delta G^{\gamma \to \varepsilon} < 50 \text{ J/mol};$$

and
a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%Cr]eq/[\%Ni]eq \leq 1.96.$$

**Formula 1**

$$\Delta G^{\gamma \to \varepsilon} = \Delta G_{chem}^{\gamma \to \varepsilon} + \Delta G_{mag}^{\gamma \to \varepsilon}$$

(In formula 1, $\Delta G_{chem}^{\gamma \to \varepsilon}$ represents a term of chemical free energy, and $\Delta G_{mag}^{\gamma \to \varepsilon}$ represents a term of magnetic free energy.)

**Formula 2**

$$\Delta G_{chem}^{\gamma \to \varepsilon} = x_{Fe} G_{Fe}^{\gamma \to \varepsilon} + x_{Mn} G_{Mn}^{\gamma \to \varepsilon} + x_{Cr} G_{Cr}^{\gamma \to \varepsilon} + x_{Ni} G_{Ni}^{\gamma \to \varepsilon} + x_{Si} G_{Si}^{\gamma \to \varepsilon}$$

$$+ x_{Al} G_{Al}^{\gamma \to \varepsilon} + x_{Fe} x_{Mn} L_{FeMn}^{\gamma \to \varepsilon} + x_{Fe} x_{Cr} L_{FeCr}^{\gamma \to \varepsilon} + x_{Fe} x_{Ni} L_{FeNi}^{\gamma \to \varepsilon}$$

$$+ x_{Fe} x_{Si} L_{FeSi}^{\gamma \to \varepsilon} + x_{Fe} x_{Al} L_{FeAl}^{\gamma \to \varepsilon} + x_{Mn} x_{Si} L_{MnSi}^{\gamma \to \varepsilon} + x_{Mn} x_{Al} L_{MnAl}^{\gamma \to \varepsilon}$$

$$+ x_{Cr} x_{Ni} L_{CrNi}^{\gamma \to \varepsilon}$$

(In formula 2, $x_{Fe}$, $x_{Mn}$, $x_{Cr}$, $x_{Ni}$, $x_{Si}$, and $x_{Al}$ are the molar fractions of Fe, Mn, Cr, Ni, Si, and Al, $G_{Fe}^{\gamma \to \varepsilon}$, $G_{Mn}^{\gamma \to \varepsilon}$, $G_{Cr}^{\gamma \to \varepsilon}$, $G_{Ni}^{\gamma \to \varepsilon}$, $G_{Si}^{\gamma \to \varepsilon}$, $G_{Al}^{\gamma \to \varepsilon}$ are the partial molar free energies of Fe, Mn, Cr, Ni, Si, and Al, and $L_{FeMn}^{\gamma \to \varepsilon}$, $L_{FeCr}^{\gamma \to \varepsilon}$, $L_{FeNi}^{\gamma \to \varepsilon}$, $L_{FeSi}^{\gamma \to \varepsilon}$, $L_{FeAl}^{\gamma \to \varepsilon}$, $L_{MnSi}^{\gamma \to \varepsilon}$, $L_{MnAl}^{\gamma \to \varepsilon}$, and $L_{CrNi}^{\gamma \to \varepsilon}$ are the interaction parameters of Fe-Mn, Fe-Cr, Fe-Ni, Fe-Si, Fe-Al, Mn-Si, Mn-Al, Cr-Ni.)

**Formula 3**

$$\Delta G_{mag}^{\gamma \to \varepsilon} = RT\ln(\beta^{\varepsilon} + 1)f^{\varepsilon}\left(T/T_N^{\varepsilon}\right) - RT\ln(\beta^{\gamma} + 1)f^{\gamma}\left(T/T_N^{\gamma}\right)$$

(in formula 3, R is a gas constant value R = 8.31 JK$^{-1}$ mol$^{-1}$, T is a temperature, $\beta^{\gamma}$, and $\beta^{\varepsilon}$ are the magnetic moments of $\gamma$ phase and $\varepsilon$ phase, $T_N^{\gamma}$, and $T_N^{\varepsilon}$ are the paramagnetic-antiferromagnetic transition temperature (Neel point) of $\gamma$ phase and $\varepsilon$ phase, and $f^{\gamma}\left(T/T_N^{\gamma}\right)$, and $f^{\varepsilon}(T/T_N^{\varepsilon})$ are the functions obtained by formulae 4 and 5.)

**Formula 4**

$$f^{\gamma} = 1 - \left[\frac{79(T/T_N^{\gamma})^{-1}}{140 \cdot 0.28} + \frac{474}{497}\left(\frac{1}{0.28} - 1\right)\left(\frac{(T/T_N^{\gamma})^3}{6} + \frac{(T/T_N^{\gamma})^9}{135} + \frac{(T/T_N^{\gamma})^{15}}{600}\right)\right]\Big/D \quad (T/T_N^{\gamma} \leq 1)$$

$$= -\left[\frac{(T/T_N^{\gamma})^{-5}}{10} + \frac{(T/T_N^{\gamma})^{-15}}{315} + \frac{(T/T_N^{\gamma})^{-25}}{1500}\right]\Big/D \quad (T/T_N^{\gamma} > 1)$$

(In formula 4, D is a constant value, and D =2. 342456517.)

**Formula 5**

$$f^{\varepsilon} = 1 - \left[\frac{79(T/T_N^{\varepsilon})^{-1}}{140 \cdot 0.28} + \frac{474}{497}\left(\frac{1}{0.28} - 1\right)\left(\frac{(T/T_N^{\varepsilon})^3}{6} + \frac{(T/T_N^{\varepsilon})^9}{135} + \frac{(T/T_N^{\varepsilon})^{15}}{600}\right)\right]\Big/D \quad (T/T_N^{\varepsilon} \leq 1)$$

$$= -\left[\frac{(T/T_N^{\varepsilon})^{-5}}{10} + \frac{(T/T_N^{\varepsilon})^{-15}}{315} + \frac{(T/T_N^{\varepsilon})^{-25}}{1500}\right]\Big/D \quad (T/T_N^{\varepsilon} > 1)$$

(In formula 5, D is a constant value, and D =2.342456517.)

**Formula 6**

Cr equivalent ([%Cr] eq) = [%Cr] + [%Mo] +1. 5 [%Si]

+0. 5 [%Nb]

**Formula 7**

Ni equivalent ([%Ni] eq) = [%Ni] +30 [%C] +0. 28 [%Mn]

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \text{ (J/mol)} = -2243.38 + 4.309T$$

$$\Delta G_{Mn}^{\gamma \to \varepsilon} \text{ (J/mol)} = -1000 + 1.123T$$

$$\Delta G_{Cr}^{\gamma \to \varepsilon} \text{ (J/mol)} = 1370 - 0.163T$$

(continued)

$$\Delta G_{Ni}^{\gamma \to \varepsilon} \ (\text{J/mol}) = 1046 + 1.255T$$

$$\Delta G_{Si}^{\gamma \to \varepsilon} \ (\text{J/mol}) = -560 - 8T$$

$$\Delta G_{Al}^{\gamma \to \varepsilon} \ (\text{J/mol}) = 2800 + 5T$$

$$L_{FeMn}^{\gamma \to \varepsilon} \ (\text{J/mol}) = 2873 - 717(x_{Fe} - x_{Mn})$$

$$L_{FeCr}^{\gamma \to \varepsilon} \ (\text{J/mol}) = -1410(x_{Cr} - x_{Fe})$$

$$L_{FeNi}^{\gamma \to \varepsilon} \ (\text{J/mol}) = 2095$$

$$L_{FeSi}^{\gamma \to \varepsilon} \ (\text{J/mol}) = 2850 + 3520(x_{Fe} - x_{Si})$$

$$L_{FeAl}^{\gamma \to \varepsilon} \ (\text{J/mol}) = 3326$$

$$L_{MnSi}^{\gamma \to \varepsilon} \ (\text{J/mol}) = 1780$$

$$L_{MnAl}^{\gamma \to \varepsilon} \ (\text{J/mol}) = -2510 - 12.845T + (13891 - 3.766T)(x_{Mn} - x_{Al})$$

$$+ (83931 - 47T)(x_{Mn} - x_{Al})^2$$

$$\beta^\gamma = 0.7x_{Fe} + 0.62x_{Mn} + 0.62x_{Ni} - 0.8x_{Cr} - 0.64x_{Fe}x_{Mn} - 4x_C$$

$$\beta^\varepsilon = 0.62x_{Mn} - 4x_C$$

$$T_N^\varepsilon \ (\text{K}) = 251.71 + 681x_{Mn} - 272x_{Cr} - 1800x_{Ni} - 1151x_{Al}$$

$$-1575x_{Si} - 1740x_C$$

$$T_N^\varepsilon \ (\text{K}) = 580x_{Mn}$$

By satisfying the above-described component composition conditions, the alloy of the present embodiment can be preferably used as a steel material or a welding material to be used in the welded structure of the present embodiment. More specifically, in an aspect in which the welded structure of the present embodiment is used as a seismic damping member, the alloy of the present embodiment is suitable for use as a steel material to be welded with a welding material, and is suitable for use as a welding material to be used for welding the steel material.

In the alloy of the present embodiment, the effect and the desirable content range of each component element and the like are the same as those described above with respect to the welded structure of the present embodiment, and therefore detailed description thereof will be omitted.

In the case of applying the alloy of the present embodiment to a steel material or a welding material included in the welded structure of the present embodiment, the alloy is intended to be used as a core material for a seismic damping member such as a seismic damper capable of coping with long-period earthquake motion, and therefore the final number of cycles to fracture or buckling by strain control cyclic tension-compression deformation with an amplitude of 1% is preferably 4000 or more.

Hereinafter, the present invention will be described in more detail with reference to Examples.

The materials, the amounts used, the proportions, the treatment contents, the treatment procedures, and the like shown in the following Examples can be appropriately changed without departing from the gist of the present invention. Therefore, the scope of the present invention should not be limitedly interpreted by the following Examples.

Examples

Using a high frequency vacuum induction heating furnace, 10 kg of each of alloys (Fe-Mn-Cr-Ni-Si-based alloys) having the component compositions of Examples 1-1 to 1-22 shown in Table 3 below was melted, cast into a mold, and thus produced, then each ingot was subjected to hot forging and hot rolling at 1000°C and thus formed into a plate material having a thickness of 20 mm, a width of 50 mm, and a length of 900 mm, and the plate material was subjected to heat treatment at 1000°C for 1 hour in an argon atmosphere and cooled with water to obtain a uniform material having an initial $\gamma$-phase structure of random equiaxed grains.

From the plate material of each Example, a dog-bone-shaped fatigue test piece having a gauge portion diameter of 8 mm was cut out, and the gauge portion was smoothly polished and subjected to a low-cycle fatigue test. The low-cycle fatigue test was performed up to fatigue fracture under the conditions of axial strain control, reversed tension-compression with an amplitude of 1% (strain ratio: R = -1), a constant strain rate of 0.4%/sec, a triangular wave, and room temperature (25°C) to measure the fatigue life (number of cycles to fracture, Nf). In addition, a weld melt run experiment was performed, in a state where a reaction tensile stress was applied to the surface of the plate material subjected to milling, to examine whether or not solidification crack was caused by welding. Table 3 summarizes these results.

In Table 3, the unit of the content of each component element is mass%, the unit of $\Delta G^{\gamma \to \varepsilon}$ is J/mol, the unit of $\alpha'$ volume percentage (content of deformation-induced $\alpha'$ martensite phase) is %, and "-" means that measurement was not performed. Table 3 also shows, in addition to the numbers of Examples, symbols indicating the characteristics and the like of the component compositions.

Table 3 describes, in the parentheses in the columns of "Nf" and "solidification crack", the estimation value (upper limit or lower limit) of the number of cycles to fracture and the prediction of the presence or absence of solidification crack, respectively, that were obtained through simulation by the present inventors based on the component composition and the values of the Mn equivalent, the Cr equivalent, the Ni equivalent, and the ratio of the Cr equivalent to the Ni equivalent of each alloy.

[Table 3]

| Symbol | Fe | Mn | Cr | Ni | Si | Mn eq | Cr eq | Ni eq | Cr eq/Ni eq | ΔG$\gamma\to\varepsilon$ | Nf | Solidification crack | α' volume percentage |
|---|---|---|---|---|---|---|---|---|---|---|---|---|---|
| Example 1-1 | 223 | 63 | 15 | 10 | 8 | 4 | 41 | 16 | 12.2 | 1.31 | -65.0 | 11020 | present | < 1 |
| Example 1-2 | 38X05 | 62.5 | 15 | 11 | 7.5 | 4 | 41 | 17 | 11.7 | 1.45 | -61.7 | 10450 | absent | < 1 |
| Example 1-3 | 381 | 62 | 15 | 12 | 7 | 4 | 41 | 18 | 11.2 | 1.61 | -58.6 | 8670 | absent | < 1 |
| Example 1-4 | 382 | 61 | 15 | 14 | 6 | 4 | 41 | 20 | 10.2 | 1.96 | -53.1 | 7520 | absent | 1.26 |
| Example 1-5 | 383 | 60 | 15 | 16 | 5 | 4 | 41 | 22 | 9.2 | 2.39 | -48.2 | embrittled | present | - |
| Example 1-6 | 38M1 | 56.5 | 21 | 11 | 7.5 | 4 | 47 | 17 | 13.38 | 1.27 | -16.6 | 11640 | present | 0 |
| Example 1-7 | 38M2 | 59.5 | 18 | 11 | 7.5 | 4 | 44 | 17 | 12.54 | 1.36 | -37.8 | 24240 | absent | 0 |
| Example 1-8 | 38M3 | 65.5 | 12 | 11 | 7.5 | 4 | 38 | 17 | 10.86 | 1.57 | -38.2 | 3487 | absent | 12.5 |
| Example 1-9 | 38M4 | 68.5 | 9 | 11 | 7.5 | 4 | 35 | 17 | 10.02 | 1.70 | -116.9 | 1622 | absent | 58.8 |
| Example 1-10 | 38M5 | 71.5 | 6 | 11 | 7.5 | 4 | 32 | 17 | 9.18 | 1.85 | -147.7 | 890 | absent | 70.4 |
| Example 1-11 | 38Mn13 | 65.4 | 13 | 11 | 7.5 | 4 | 39 | 17 | 11.14 | 1.53 | -79.1 | (>4000) | (absent) | - |
| Example 1-12 | 38Mn14 | 65.4 | 14 | 11 | 7.5 | 4 | 40 | 17 | 11.42 | 1.49 | -70.3 | (>5000) | (absent) | - |
| Example 1-13 | 38Mn16 | 65.4 | 16 | 11 | 7.5 | 4 | 42 | 17 | 11.98 | 1.42 | -53.4 | (>5000) | (absent) | - |
| Example 1-14 | 38Mn17 | 65.4 | 17 | 11 | 7.5 | 4 | 43 | 17 | 12.26 | 1.39 | -45.5 | (>4000) | (present) | - |
| Example 1-15 | 38Z1 | 56.9 | 15 | 14 | 10.1 | 4 | 49.2 | 20 | 14.3 | 1.40 | 36.8 | 6340 | absent | 0 |
| Example 1-16 | 38Z2 | 59.72 | 15 | 12.5 | 8.78 | 4 | 45.06 | 18.5 | 12.98 | 1.43 | -11.3 | 22750 | absent | < 1 |
| Example 1-17 | 38Z4 | 65.36 | 15 | 9.5 | 6.14 | 4 | 36.78 | 15.5 | 10.34 | 1.50 | -116.9 | 5980 | absent | 1.96 |
| Example 1-18 | 38Z5 | 68.18 | 15 | 8 | 4.82 | 4 | 32.64 | 14 | 9.02 | 1.55 | -172.4 | 3197 | absent | 12.66 |
| Example 1-19 | 22S3 | 63 | 15 | 10 | 8 | 3 | 41 | 14.5 | 12.2 | 1.19 | -59.5 | 10820 | (present) | < 1 |
| Example 1-20 | 22S5 | 63 | 15 | 10 | 8 | 5 | 41 | 17.5 | 12.2 | 1.43 | -72.5 | 10400 | (absent) | < 1 |
| Example 1-21 | 22S6 | 63 | 15 | 10 | 8 | 6 | 41 | 19 | 12.2 | 1.56 | -89.6 | 9510 | (absent) | < 1 |
| Example 1-22 | 22S7 | 63 | 15 | 10 | 8 | 7 | 41 | 20.5 | 12.2 | 1.68 | -107.8 | 1942 | (present) | < 1 |

As shown in Table 3, in Example 1-1, a high value of the number of cycles to fracture of 11000 or more was obtained, but solidification crack was caused in the weld melt run experiment. From this result, it can be understood that in Example 1-1, although a fatigue life of 4000 cycles or more was obtained because the value of $\Delta G^{\gamma \to \varepsilon}$ (-65.0 J/mol) satisfied the above-described preferable condition (-150 J/mol < $\Delta G^{\gamma \to \varepsilon}$ < 50 J/mol), solidification crack was caused because the value of the ratio of the Cr equivalent to the Ni equivalent ([%Cr]eq/[%Ni]eq) (1.31) did not satisfy the above-described preferable condition (1.33 < [%Cr]eq/[%Ni]eq ≤ 1.96).

In Example 1-5, the alloy was embrittled in the low-cycle fatigue test and therefore the number of cycles to fracture was unmeasured, and solidification crack was caused in the weld melt run experiment. From this result, it can be understood that in Example 1-5, the formation of a deformation-induced α' martensite phase was excessive and the alloy was embrittled because the content of Cr (16 mass%) was more than 15 mass%, and that solidification crack was caused because the value of the ratio of the Cr equivalent to the Ni equivalent ([%Cr]eq/[%Ni]eq) (2.39) did not satisfy the above-described preferable condition (1.33 < [%Cr]eq/[%Ni]eq ≤ 1.96).

Meanwhile, in Examples 1-2, 1-3, and 1-4, the number of cycles to fracture that significantly exceeded 4000 was obtained, and no solidification crack was caused in the weld melt run experiment. These results indicate that if the value of $\Delta G^{\gamma \to \varepsilon}$, the value of the ratio of the Cr equivalent to the Ni equivalent ([%Cr]eq/[%Ni]eq), and the content of each component element satisfy the above-described preferable conditions, an effect of the present invention can be obtained. In addition, in Examples 1-2, 1-3, and 1-4, the value of the Mn equivalent is 41 and satisfies the above-described preferable conditions (36 < [%Mn]eq < 50 and more preferably 38 < [%Mn]eq < 44), and therefore it is suggested that the bidirectional deformation-induced martensitic transformation between a γ austenite phase and an ε martensite phase was effectively developed.

Using a commercially available austenitic stainless steel material (SUS 316), the fatigue life was measured and a weld melt run experiment was performed for comparison under the same conditions as described above. As a result, although no solidification crack was caused in the weld melt run experiment, the number of cycles to fracture was 1531, which was significantly lower than 4000 as the reference value in the present invention.

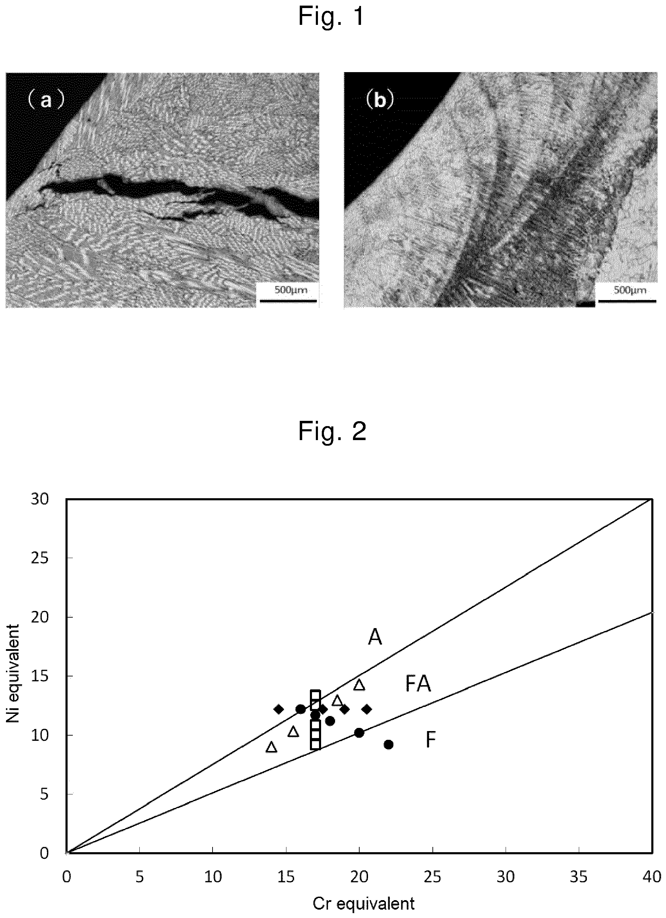

Figs. 1(a) and 1(b) are microscopic images showing the results of confirming the presence or absence of solidification crack in the weld melt run experiments in Examples 1-1 and 1-2, respectively.

In addition, a diagram was prepared by plotting point coordinates ([%Cr]eq, [%Ni]eq) on a Schaeffler diagram on the basis of the component compositions of the alloys of Examples 1-1 to 1-5 and drawing the straight line indicating the boundary of the solidification mode and the straight line indicating the range of the Mn equivalent (36 < [%Mn]eq < 50 or 38 < [%Mn]eq < 44) in a case where the content of Si is 4 mass% (corresponding to the component compositions of the alloys of Examples 1-1 to 1-5).

From these results, it is considered that in Examples 1-2 to 1-4, the Cr equivalent was increased and the Ni equivalent was decreased as compared with Example 1-1 and thus the ratio of the Cr equivalent to the Ni equivalent ([%Cr]eq/[%Ni]eq) satisfied the condition of 1.33 < [%Cr]eq/[%Ni]eq ≤ 1.96, so that the weld metal had a component composition in the FA solidification mode in the weld melt run experiment and occurrence of solidification crack was suppressed.

In addition, as a result of measuring the content of the α' martensite phase in the test materials of Examples 1-1 to 1-4 after fatigue fracture using a ferrite meter, the content was more than 0 vol% and less than 1 vol% (described as "< 1" in Table 3) in the test materials of Examples 1-1 to 1-3, and 1.26 vol% in the test material of Example 1-4.

In addition, as a result of measuring the volume percentage of the ε martensite phase in the test materials of Examples 1-1 and 1-4 after fatigue fracture with an electron backscatter diffraction method, the volume percentage was 61 vol% in Example 1-1 and 74 vol% in Example 1-4.

Fig. 2 shows a diagram obtained by plotting point coordinates ([%Cr]eq, [%Ni]eq) on a Schaeffler diagram on the basis of the component compositions of the alloys of Examples 1-1 to 1-10 and Examples 1-15 to 1-22.

In Fig. 2, five plotted circles correspond to Example 1-1, Example 1-2, Example 1-3, Example 1-4, and Example 1-5 in order from the left side along the x axis (Cr equivalent).

Five plotted squares correspond to Example 1-6, Example 1-7, Example 1-8, Example 1-9, and Example 1-10 in order from the top along the y axis (Ni equivalent).

Four plotted upward triangles correspond to Example 1-18, Example 1-17, Example 1-16, and Example 1-15 in order from the left side along the x axis (Cr equivalent).

Four plotted rhombuses correspond to Example 1-22, Example 1-21, Example 1-20, and Example 1-19 in order from the left side along the x axis (Cr equivalent).

In Fig. 2, two straight lines each indicating the boundary of the solidification mode are also drawn.

From Table 3 and the Schaeffler diagram shown in Fig. 2, it can be seen that the alloys of Examples 1-2 to 1-4, 1-7, 1-15 to 1-17, 1-20, and 1-21 achieve the number of cycles to fracture that significantly exceeds 4000, the weld metal has a component composition in the FA solidification mode in the weld melt run experiment, and no solidification crack is caused because the alloys satisfy the above-described preferable component composition conditions of the alloy steel according to the embodiment of the present invention and because the value of $\Delta G^{\gamma \to \varepsilon}$ and the value of the ratio of the Cr equivalent to the Ni equivalent ([%Cr]eq/[% Ni]eq) satisfy the above-described preferable conditions.

Here, regarding the value of $\Delta G^{\gamma \to \varepsilon}$, the above-described preferable condition (-150 J/mol < $\Delta G^{\gamma \to \varepsilon}$ < 50 J/mol) is satisfied in Examples 1-1 to 1-22 excluding Example 1-18, and therefore when only the value of $\Delta G^{\gamma \to \varepsilon}$ is used as an index, it can be said that a fatigue life of 4000 cycles or more may be obtained. However, some test materials of multicomponent alloys actually have a number of cycles to fracture of less than 4000 because another influential factor (such as formation of a deformation-induced $\alpha$' martensite phase) also acts multiply. That is, it is suggested that an effect obtained by the present invention is not brought about by a simple combination of the above-described individual conditions, indexes, and parameters, and the like, and that in a welded structure including a damping alloy represented by an FMS alloy as a base material, in the case of arranging the conditions to be satisfied by the microstructure and the deformation mechanism of the microstructure from the viewpoint of the alloy component design guideline, an effect obtained by the present invention is effectively brought about rather by utilizing the characteristics (technical significance) of each condition and the like and effectively combining a plurality of conditions and the like.

Specifically, for example, in Examples 1-8, 1-9, and 1-10, the value of $\Delta G^{\gamma \to \varepsilon}$ satisfies the above-described preferable condition (-150 J/mol < $\Delta G^{\gamma \to \varepsilon}$ < 50 J/mol), but the number of cycles to fracture is 3487, 1622, and 890, respectively. In addition, as a result of measuring the content of the $\alpha$' martensite phase in the test materials after fatigue fracture using a ferrite meter, the content was 12.5 vol%, 58.8 vol%, and 70.4 vol%, respectively, and there was a tendency that the fatigue life was reduced as the volume percentage of the deformation-induced $\alpha$' martensite phase increased. These results suggest that the formation of the deformation-induced $\alpha$' martensite phase and the volume percentage of the deformation-induced $\alpha$' martensite phase have a certain correlation with the fatigue life.

Next, two kinds of alloys of Examples 1-1 and 1-3 were subjected to wire drawing to produce welding wires, welded joints were produced by combining a plate material and a welding wire having the same component composition by MIG welding, and a minute fatigue test piece (a dog-bone-shaped fatigue test piece having a gauge portion diameter of 3 mm) was cut out from the weld metal in each welded portion and a fatigue test was performed. The fatigue test conditions are the same as described above. In addition, the presence or absence of solidification crack was investigated in the weld metal in the welded portion of each welded joint. Table 4 summarizes these results.

[Table 4]

|  | Base material / Welding material | Nf | Solidification crack |
|---|---|---|---|
| Example 2-1 | Example 1-1 / Example 1-1 | 3130 | present |
| Example 2-2 | Example 1-3 / Example 1-3 | 5429 | absent |

As shown in Table 4, in Example 2-1, the alloy of Example 1-1 having a long fatigue life is used in both the plate material (base material) and the welding wire (welding material), but as described above, this alloy has a property such that solidification crack is likely to be caused by welding, and therefore solidification crack was caused in the weld metal in the welded portion of the produced welded joint, and the welded joint had a fatigue life of a number of cycles to fracture of 3130, which was significantly lower than the fatigue life of the plate material itself (a number of cycles to fracture of 11000 or more).

Meanwhile, as in Example 2-2, in the combination of the plate material (base material) and the welding wire (welding material) selected so as to satisfy both the conditions of the prolongation of the fatigue life and the solidification mode in which solidification crack is less likely to be caused by welding, no solidification crack was caused in the weld metal in the welded portion of the welded joint, and a high fatigue life that significantly exceeded 4000 cycles was obtained even in the welded portion of the welded joint.

In addition, even if the base material and the welding material have different component compositions, when an arbitrary mixed component thereof satisfies both the conditions of the prolongation of the fatigue life and the solidification mode in which solidification crack is less likely to be caused by welding, a fatigue life significantly exceeding 4000 cycles is obtained. Table 5 below shows examples of a preferable combination of the base material and the welding material in the case of producing the welded structure using the alloy having the component composition shown in Table 3.

[Table 5]

| Base material / Welding material |
|---|
| Example 1-2 / Example 1-2 |
| Example 1-2 / Example 1-3 |
| Example 1-2 / Example 1-4 |

(continued)

| Base material / Welding material |
|---|
| Example 1-3 / Example 1-3 |
| Example 1-3 / Example 1-2 |
| Example 1-3 / Example 1-4 |
| Example 1-4 / Example 1-4 |
| Example 1-4 / Example 1-2 |
| Example 1-4 / Example 1-3 |
| Example 1-7 / Example 1-7 |
| Example 1-15 / Example 1-15 |
| Example 1-15 / Example 1-16 |
| Example 1-15 / Example 1-17 |
| Example 1-16 / Example 1-16 |
| Example 1-16 / Example 1-15 |
| Example 1-16 / Example 1-17 |
| Example 1-17 / Example 1-17 |
| Example 1-17 / Example 1-15 |
| Example 1-17 / Example 1-16 |
| Example 1-20 / Example 1-20 |
| Example 1-20 / Example 1-21 |
| Example 1-21 / Example 1-21 |
| Example 1-21 / Example 1-20 |

Industrial Applicability

The welded structure of the present invention exhibits an excellent fatigue characteristic equivalent to that of the steel material of the base material even in the welded portion, and therefore the welded structure is suitable as an elastic-plastic damper that suppresses vibration due to an earthquake, wind shake, or the like in a building structure, and is particularly suitable, as a high-performance damper having higher performance than conventional seismic dampers, for a damping structure of a large building structure such as a skyscraper or a large-scale exhibition hall.

**Claims**

1.  A welded structure having a structure in which a plurality of steel materials is welded with a welding material, said steel materials being a base material, wherein

    a weld metal has a component composition in an FA solidification mode, the base material, a weld heat-affected zone (HAZ), and the weld metal have a metal structure, before cyclic elastic-plastic deformation, including 85 vol% or more and less than 100 vol% of a $\gamma$ austenite phase (FCC structure), 0 vol% or more and less than 14.5 vol% of a total of a $\delta$ ferrite phase (BCC structure or BCT structure) and an initial $\epsilon$ martensite phase, and 0 vol% or more and less than 0.5 vol% of a total of inevitable precipitates/inclusions such as a carbide, a nitride, an oxide, and a silicide,
    the base material, the weld heat-affected zone, and the weld metal have a metal structure, immediately before fatigue fracture or at a time of fatigue fracture, including 10 vol% or more and less than 90 vol% of a deformation-induced $\epsilon$ martensite phase (HCP structure), 0 vol% or more and less than 12 vol% of a deformation-induced $\alpha'$ martensite phase (BCC structure or BCT structure), 10 vol% or more and 90 vol% or less of a remaining $\gamma$

austenite phase, 0 vol% or more and less than 14.5 vol% of a total of a δ ferrite phase and an initial ε martensite phase, and 0 vol% or more and less than 0.5 vol% of a total of inevitable precipitates/inclusions such as a carbide, a nitride, an oxide, and a silicide, and

when the welded structure is subjected to cyclic elastic-plastic deformation, a microstructure changes from the metal structure before cyclic elastic-plastic deformation to the metal structure immediately before fatigue fracture or at a time of fatigue fracture, and in response to sequential cyclic elastic-plastic deformation, deformation-induced martensitic transformation from a γ austenite phase to an ε martensite phase and a reverse transformation from an ε martensite phase to a γ austenite phase occur alternately and repeatedly and a volume percentage of a deformation-induced ε martensite phase sequentially increases.

2. The welded structure according to claim 1, wherein

the base material, the weld heat-affected zone, and the weld metal consist of a component composition of, before the cyclic elastic-plastic deformation:

12 mass% ≤ Mn ≤ 18 mass%, 5 mass% ≤ Cr ≤ 15 mass%, 5 mass% ≤ Ni < 12 mass%, and 2 mass% ≤ Si ≤ 6 mass%, and

0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements, with the balance being Fe and inevitable impurities,

wherein the component composition satisfies:

a condition that a Gibbs free energy difference between a γ phase and an ε phase, $\Delta G^{\gamma \to \varepsilon}$, defined by Formulae 1 to 5 described below and thermodynamic parameters in Table 1 satisfies

$$-150 \text{ J/mol} < \Delta G^{\gamma \to \varepsilon} < 50 \text{ J/mol};$$

and

a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%\text{Cr}]\text{eq}/[\%\text{Ni}]\text{eq} \le 1.96.$$

**Formula 1**

$$\Delta G^{\gamma \to \varepsilon} = \Delta G_{chem}^{\gamma \to \varepsilon} + \Delta G_{mag}^{\gamma \to \varepsilon}$$

(In formula 1, $\Delta G_{chem}^{\gamma \to \varepsilon}$ represents a term of chemical free energy, and $\Delta G_{mag}^{\gamma \to \varepsilon}$ represents a term of magnetic free energy.)

**Formula 2**

$$\Delta G_{chem}^{\gamma \to \varepsilon} = x_{Fe} G_{Fe}^{\gamma \to \varepsilon} + x_{Mn} G_{Mn}^{\gamma \to \varepsilon} + x_{Cr} G_{Cr}^{\gamma \to \varepsilon} + x_{Ni} G_{Ni}^{\gamma \to \varepsilon} + x_{Si} G_{Si}^{\gamma \to \varepsilon}$$

$$+ x_{Al} G_{Al}^{\gamma \to \varepsilon} + x_{Fe} x_{Mn} L_{FeMn}^{\gamma \to \varepsilon} + x_{Fe} x_{Cr} L_{FeCr}^{\gamma \to \varepsilon} + x_{Fe} x_{Ni} L_{FeNi}^{\gamma \to \varepsilon}$$

$$+ x_{Fe} x_{Si} L_{FeSi}^{\gamma \to \varepsilon} + x_{Fe} x_{Al} L_{FeAl}^{\gamma \to \varepsilon} + x_{Mn} x_{Si} L_{MnSi}^{\gamma \to \varepsilon} + x_{Mn} x_{Al} L_{MnAl}^{\gamma \to \varepsilon}$$

$$+ x_{Cr} x_{Ni} L_{CrNi}^{\gamma \to \varepsilon}$$

(In formula 2, $x_{Fe}$, $x_{Mn}$, $x_{Cr}$, $x_{Ni}$, $x_{Si}$, and $x_{Al}$ are the molar fractions of Fe, Mn, C r , Ni , S i , and A l ,

$G_{Fe}^{\gamma \to \varepsilon}$ 、 $G_{Mn}^{\gamma \to \varepsilon}$ 、 $G_{Cr}^{\gamma \to \varepsilon}$ 、 $G_{Ni}^{\gamma \to \varepsilon}$ 、 $G_{Si}^{\gamma \to \varepsilon}$ 、 $G_{Al}^{\gamma \to \varepsilon}$ are the partial molar free energies of F e , Mn , C r , N i , S i , and A I , and $L_{FeMn}^{\gamma \to \varepsilon}$ 、 $L_{FeCr}^{\gamma \to \varepsilon}$ 、 $L_{FeNi}^{\gamma \to \varepsilon}$ 、 $L_{FeSi}^{\gamma \to \varepsilon}$ 、 $L_{FeAl}^{\gamma \to \varepsilon}$ 、 $L_{MnSi}^{\gamma \to \varepsilon}$ , $L_{MnAl}^{\gamma \to \varepsilon}$ , and $L_{CrNi}^{\gamma \to \varepsilon}$ are the interaction parameters of Fe -Mn, F e - C r , F e - N i , Fe - Si, Fe - Al, Mn - Si, Mn - Al, Cr - Ni.)

### Formula 3

$$\Delta G_{mag}^{\gamma \to \varepsilon} = RT \ln(\beta^\varepsilon + 1) f^\varepsilon \left(T/T_N^\varepsilon\right) - RT \ln(\beta^\gamma + 1) f^\gamma (T/T_N^\gamma)$$

(in formula 3, R is a gas constant value R = 8.31 JK$^{-1}$ mol$^{-1}$ , T is a temperature, $\beta^\gamma$, and $\beta^\varepsilon$ are the magnetic moments of $\gamma$ phase and $\varepsilon$ phase, $T_N^\gamma$ , and $T_N^\varepsilon$ are the paramagnetic-antiferromagnetic transition temperature (Neel point) of $\gamma$ phase and $\varepsilon$ phase, and $f^\gamma\left(T/T_N^\gamma\right)$ , and $f^\varepsilon(T/T_N^\varepsilon)$ are the functions obtained by formulae 4 and 5.)

### Formula 4

$$f^\gamma = 1 - \left[\frac{79(T/T_N^\gamma)^{-1}}{140 \cdot 0.28} + \frac{474}{497}\left(\frac{1}{0.28} - 1\right)\left(\frac{(T/T_N^\gamma)^3}{6} + \frac{(T/T_N^\gamma)^9}{135} + \frac{(T/T_N^\gamma)^{15}}{600}\right)\right]\Big/ D \quad (T/T_N^\gamma \leq 1)$$

$$= -\left[\frac{(T/T_N^\gamma)^{-5}}{10} + \frac{(T/T_N^\gamma)^{-15}}{315} + \frac{(T/T_N^\gamma)^{-25}}{1500}\right]\Big/ D \quad (T/T_N^\gamma > 1)$$

(In formula 4, D is a constant value, and D =2. 342456517.)

### Formula 5

$$f^\varepsilon = 1 - \left[\frac{79(T/T_N^\varepsilon)^{-1}}{140 \cdot 0.28} + \frac{474}{497}\left(\frac{1}{0.28} - 1\right)\left(\frac{(T/T_N^\varepsilon)^3}{6} + \frac{(T/T_N^\varepsilon)^9}{135} + \frac{(T/T_N^\varepsilon)^{15}}{600}\right)\right]\Big/ D \quad (T/T_N^\varepsilon \leq 1)$$

$$= -\left[\frac{(T/T_N^\varepsilon)^{-5}}{10} + \frac{(T/T_N^\varepsilon)^{-15}}{315} + \frac{(T/T_N^\varepsilon)^{-25}}{1500}\right]\Big/ D \quad (T/T_N^\varepsilon > 1)$$

(In formula 5, D is a constant value, and D =2.342456517.)

### Formula 6

Cr equivalent（[％C r ] e q）＝ [％C r ] ＋ [％M o] ＋1． 5 [％S i ]

＋0． 5 [％N b]

### Formula 7

Ni equivalent（[％N i ] e q）＝ [％N i ] ＋30 [％C] ＋0． 28 [％M n]

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \text{ (J/mol)} = -2243.38 + 4.309T$$

(continued)

$$\Delta G_{Mn}^{\gamma \to \varepsilon} \ (\mathrm{J/mol}) = -1000 + 1.123T$$

$$\Delta G_{Cr}^{\gamma \to \varepsilon} \ (\mathrm{J/mol}) = 1370 - 0.163T$$

$$\Delta G_{Ni}^{\gamma \to \varepsilon} \ (\mathrm{J/mol}) = 1046 + 1.255T$$

$$\Delta G_{Si}^{\gamma \to \varepsilon} \ (\mathrm{J/mol}) = -560 - 8T$$

$$\Delta G_{Al}^{\gamma \to \varepsilon} \ (\mathrm{J/mol}) = 2800 + 5T$$

$$L_{FeMn}^{\gamma \to \varepsilon} \ (\mathrm{J/mol}) = 2873 - 717(x_{Fe} - x_{Mn})$$

$$L_{FeCr}^{\gamma \to \varepsilon} \ (\mathrm{J/mol}) = -1410(x_{Cr} - x_{Fe})$$

$$L_{FeNi}^{\gamma \to \varepsilon} \ (\mathrm{J/mol}) = 2095$$

$$L_{FeSi}^{\gamma \to \varepsilon} \ (\mathrm{J/mol}) = 2850 + 3520(x_{Fe} - x_{Si})$$

$$L_{FeAl}^{\gamma \to \varepsilon} \ (\mathrm{J/mol}) = 3326$$

$$L_{MnSi}^{\gamma \to \varepsilon} \ (\mathrm{J/mol}) = 1780$$

$$L_{MnAl}^{\gamma \to \varepsilon} \ (\mathrm{J/mol}) = -2510 - 12.845T + (13891 - 3.766T)(x_{Mn} - x_{Al})$$

$$+ (83931 - 47T)(x_{Mn} - x_{Al})^2$$

$$\beta^{\gamma} = 0.7x_{Fe} + 0.62x_{Mn} + 0.62x_{Ni} - 0.8x_{Cr} - 0.64x_{Fe}x_{Mn} - 4x_C$$

$$\beta^{\varepsilon} = 0.62x_{Mn} - 4x_C$$

$$T_N^{\varepsilon} \ (\mathrm{K}) = 251.71 + 681x_{Mn} - 272x_{Cr} - 1800x_{Ni} - 1151x_{Al}$$

$$- 1575x_{Si} - 1740x_C$$

$$T_N^{\varepsilon} \ (\mathrm{K}) = 580x_{Mn}$$

3. The welded structure according to claim 2, wherein the base material, the weld heat-affected zone, and the weld metal have a substantially identical component composition before the cyclic elastic-plastic deformation.

4. The welded structure according to claim 2, wherein the base material, the weld heat-affected zone, and the weld metal have different component compositions before the cyclic elastic-plastic deformation.

5. The welded structure according to any one of claims 1 to 4, wherein a number of cycles to fracture by strain control cyclic tension-compression deformation with an amplitude of 1% is 4000 or more.

6. A Fe-Mn-Cr-Ni-Si-based alloy to be used in the welded structure according to any one of claims 1 to 5, said Fe-Mn-Cr-Ni-Si-based alloy consisting of a component composition of:

   12 mass% ≤ Mn ≤ 18 mass%, 5 mass% ≤ Cr ≤ 15 mass%, 5 mass% ≤ Ni < 12 mass%, and 2 mass% ≤ Si ≤ 6 mass% and
   0 mass% or more and 1 mass% or less of a total of Al, Co, Cu, Nb, Ta, V, Ti, and Mo and 0 mass% or more and 0.2 mass% or less of a total of C, N, and B as optional elements or inevitably contained impurity elements,

with the balance being Fe and inevitable impurities,
wherein the component composition satisfies:

a condition that a Gibbs free energy difference between a $\gamma$ phase and an $\varepsilon$ phase, $\Delta G^{\gamma \to \varepsilon}$, defined by Formulae 1 to 5 described below and thermodynamic parameters in Table 1 satisfies

$$-150 \text{ J/mol} < \Delta G^{\gamma \to \varepsilon} < 50 \text{ J/mol};$$

and
a condition that a ratio of a Cr equivalent ([%Cr]eq) defined by Formula 6 described below to a Ni equivalent ([%Ni]eq) defined by Formula 7 described below, [%Cr]eq/[%Ni]eq, satisfies

$$1.33 < [\%Cr]eq/[\%Ni]eq \leq 1.96.$$

### Formula 1

$$\Delta G^{\gamma \to \varepsilon} = \Delta G_{chem}^{\gamma \to \varepsilon} + \Delta G_{mag}^{\gamma \to \varepsilon}$$

(In formula 1, $\Delta G_{chem}^{\gamma \to \varepsilon}$ represents a term of chemical free energy, and $\Delta G_{mag}^{\gamma \to \varepsilon}$ represents a term of magnetic free energy.)

### Formula 2

$$\Delta G_{chem}^{\gamma \to \varepsilon} = x_{Fe} G_{Fe}^{\gamma \to \varepsilon} + x_{Mn} G_{Mn}^{\gamma \to \varepsilon} + x_{Cr} G_{Cr}^{\gamma \to \varepsilon} + x_{Ni} G_{Ni}^{\gamma \to \varepsilon} + x_{Si} G_{Si}^{\gamma \to \varepsilon}$$

$$+ x_{Al} G_{Al}^{\gamma \to \varepsilon} + x_{Fe} x_{Mn} L_{FeMn}^{\gamma \to \varepsilon} + x_{Fe} x_{Cr} L_{FeCr}^{\gamma \to \varepsilon} + x_{Fe} x_{Ni} L_{FeNi}^{\gamma \to \varepsilon}$$

$$+ x_{Fe} x_{Si} L_{FeSi}^{\gamma \to \varepsilon} + x_{Fe} x_{Al} L_{FeAl}^{\gamma \to \varepsilon} + x_{Mn} x_{Si} L_{MnSi}^{\gamma \to \varepsilon} + x_{Mn} x_{Al} L_{MnAl}^{\gamma \to \varepsilon}$$

$$+ x_{Cr} x_{Ni} L_{CrNi}^{\gamma \to \varepsilon}$$

(In formula 2, $x_{Fe}$, $x_{Mn}$, $x_{Cr}$, $x_{Ni}$, $x_{Si}$, and $x_{Al}$ are the molar fractions of Fe, Mn, C r , N i , S i , and A l ,

$G_{Fe}^{\gamma \to \varepsilon}$、$G_{Mn}^{\gamma \to \varepsilon}$、$G_{Cr}^{\gamma \to \varepsilon}$、$G_{Ni}^{\gamma \to \varepsilon}$、$G_{Si}^{\gamma \to \varepsilon}$、$G_{Al}^{\gamma \to \varepsilon}$ are the partial molar free energies of F e , M n , C r , N i , S i , and A l , and $L_{FeMn}^{\gamma \to \varepsilon}$、$L_{FeCr}^{\gamma \to \varepsilon}$、$L_{FeNi}^{\gamma \to \varepsilon}$、$L_{FeSi}^{\gamma \to \varepsilon}$、$L_{FeAl}^{\gamma \to \varepsilon}$、$L_{MnSi}^{\gamma \to \varepsilon}$, $L_{MnAl}^{\gamma \to \varepsilon}$, and $L_{CrNi}^{\gamma \to \varepsilon}$ are the interaction parameters of F e -Mn, F e - C r , F e - N i , Fe - Si, Fe - Al, Mn - Si, Mn - Al, Cr - Ni.)

### Formula 3

$$\Delta G_{mag}^{\gamma \to \varepsilon} = RT \ln(\beta^{\varepsilon} + 1) f^{\varepsilon} \left( T/T_N^{\varepsilon} \right) - RT \ln(\beta^{\gamma} + 1) f^{\gamma} (T/T_N^{\gamma})$$

(in formula 3, R is a gas constant value R = 8. 31 JK$^{-1}$ mol$^{-1}$ , T is a temperature, $\beta^{\gamma}$, and $\beta^{\varepsilon}$ are the magnetic moments of $\gamma$ phase and $\varepsilon$ phase, $T_N^{\gamma}$ , and $T_N^{\varepsilon}$ are the paramagnetic-antiferromagnetic transition temperature (Neel point) of $\gamma$ phase and $\varepsilon$ phase, and $f^{\gamma} \left( T/T_N^{\gamma} \right)$ , and $f^{\varepsilon} (T/T_N^{\varepsilon} )$ are the functions obtained by formulae 4 and 5.)

**Formula 4**

$$f^{\gamma} = 1 - \left[\frac{79(T/T_N^{\gamma})^{-1}}{140 \cdot 0.28} + \frac{474}{497}\left(\frac{1}{0.28} - 1\right)\left(\frac{(T/T_N^{\gamma})^3}{6} + \frac{(T/T_N^{\gamma})^9}{135} + \frac{(T/T_N^{\gamma})^{15}}{600}\right)\right]\Big/ D \quad (T/T_N^{\gamma} \le 1)$$

$$= -\left[\frac{(T/T_N^{\gamma})^{-5}}{10} + \frac{(T/T_N^{\gamma})^{-15}}{315} + \frac{(T/T_N^{\gamma})^{-25}}{1500}\right]\Big/ D \quad (T/T_N^{\gamma} > 1)$$

(In formula 4, D is a constant value, and D =2. 342456517.)

**Formula 5**

$$f^{\varepsilon} = 1 - \left[\frac{79(T/T_N^{\varepsilon})^{-1}}{140 \cdot 0.28} + \frac{474}{497}\left(\frac{1}{0.28} - 1\right)\left(\frac{(T/T_N^{\varepsilon})^3}{6} + \frac{(T/T_N^{\varepsilon})^9}{135} + \frac{(T/T_N^{\varepsilon})^{15}}{600}\right)\right]\Big/ D \quad (T/T_N^{\varepsilon} \le 1)$$

$$= -\left[\frac{(T/T_N^{\varepsilon})^{-5}}{10} + \frac{(T/T_N^{\varepsilon})^{-15}}{315} + \frac{(T/T_N^{\varepsilon})^{-25}}{1500}\right]\Big/ D \quad (T/T_N^{\varepsilon} > 1)$$

(In formula 5, D is a constant value, and D =2.342456517.)

**Formula 6**

$$\text{Cr equivalent} ([\%Cr] \ eq) = [\%Cr] + [\%Mo] + 1.5[\%Si] + 0.5[\%Nb]$$

**Formula 7**

$$\text{Ni equivalent} ([\%Ni] \ eq) = [\%Ni] + 30[\%C] + 0.28[\%Mn]$$

(In formula 6 and formula 7, [%Cr], [%Mo], [%Si], [%Nb], [%Ni], [%C], and [%Mn] represent mass% of Cr, Mo, Si, Nb, Ni, C, and Mn, respectively.)

**Table 1**

$$\Delta G_{Fe}^{\gamma \to \varepsilon} \ (\text{J/mol}) = -2243.38 + 4.309T$$

$$\Delta G_{Mn}^{\gamma \to \varepsilon} \ (\text{J/mol}) = -1000 + 1.123T$$

$$\Delta G_{Cr}^{\gamma \to \varepsilon} \ (\text{J/mol}) = 1370 - 0.163T$$

$$\Delta G_{Ni}^{\gamma \to \varepsilon} \ (\text{J/mol}) = 1046 + 1.255T$$

$$\Delta G_{Si}^{\gamma \to \varepsilon} \ (\text{J/mol}) = -560 - 8T$$

$$\Delta G_{Al}^{\gamma \to \varepsilon} \ (\text{J/mol}) = 2800 + 5T$$

$$L_{FeMn}^{\gamma \to \varepsilon} \ (\text{J/mol}) = 2873 - 717(x_{Fe} - x_{Mn})$$

$$L_{FeCr}^{\gamma \to \varepsilon} \ (\text{J/mol}) = -1410(x_{Cr} - x_{Fe})$$

(continued)

$$L_{FeNi}^{\gamma\to\varepsilon} \text{ (J/mol)} = 2095$$

$$L_{FeSi}^{\gamma\to\varepsilon} \text{ (J/mol)} = 2850 + 3520(x_{Fe} - x_{Si})$$

$$L_{FeAl}^{\gamma\to\varepsilon} \text{ (J/mol)} = 3326$$

$$L_{MnSi}^{\gamma\to\varepsilon} \text{ (J/mol)} = 1780$$

$$L_{MnAl}^{\gamma\to\varepsilon} \text{ (J/mol)} = -2510 - 12.845T + (13891 - 3.766T)(x_{Mn} - x_{Al})$$

$$+(83931 - 47T)(x_{Mn} - x_{Al})^2$$

$$\beta^\gamma = 0.7x_{Fe} + 0.62x_{Mn} + 0.62x_{Ni} - 0.8x_{Cr} - 0.64x_{Fe}x_{Mn} - 4x_C$$

$$\beta^\varepsilon = 0.62x_{Mn} - 4x_C$$

$$T_N^\varepsilon \text{ (K)} = 251.71 + 681x_{Mn} - 272x_{Cr} - 1800x_{Ni} - 1151x_{Al}$$

$$-1575x_{Si} - 1740x_C$$

$$T_N^\varepsilon \text{ (K)} = 580x_{Mn}$$

7. The Fe-Mn-Cr-Ni-Si-based alloy according to claim 6, wherein in said Fe-Mn-Cr-Ni-Si-based alloy Cr and Ni are present in amounts of 11 mass% ≤ Cr ≤ 14 mass%, and 6 mass% ≤ Ni ≤ 7.5 mass%.

8. The Fe-Mn-Cr-Ni-Si-based alloy according to claim 6 or 7, wherein a number of cycles to fracture by strain control cyclic tension-compression deformation with an amplitude of 1% is 4000 or more.

9. A welded structure having a structure in which the Fe-Mn-Cr-Ni-Si-based alloy according to any one of claims 6 to 8 is welded with a welding material.

10. The welded structure according to claim 9, wherein the welding material is produced using the Fe-Mn-Cr-Ni-Si-based alloy according to any one of claims 6 to 8.

11. The welded structure according to claim 9 or 10, wherein said welded structure is a seismic damping member.

12. A welding material produced by using the Fe-Mn-Cr-Ni-Si-based alloy according to any one of claims 6 to 8.

## Fig. 1

## Fig. 2

# EP 4 174 204 A1

**INTERNATIONAL SEARCH REPORT**

| International application No. |
|---|
| PCT/JP2021/016266 |

**A. CLASSIFICATION OF SUBJECT MATTER**
Int.Cl. C22C38/00(2006.01)i, B23K35/30(2006.01)i, C22C38/58(2006.01)i, E04H9/02(2006.01)i
FI: C22C38/00302A, C22C38/00302T, C22C38/58, B23K35/30320A, E04H9/02351
According to International Patent Classification (IPC) or to both national classification and IPC

**B. FIELDS SEARCHED**

Minimum documentation searched (classification system followed by classification symbols)
Int.Cl. C22C38/00-38/60, B23K35/30, E04H9/02

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-150586 A (NATIONAL INSTITUTE FOR MATERIALS SCIENCE) 24 August 2015 (2015-08-24), claims, paragraphs [0001], [0019], [0026] | 1-12 |
| A | JP 2004-218060 A (NIPPON SANGYO KAGAKU KENKYUSHO) 05 August 2004 (2004-08-05), claims | 1-12 |
| A | JP 2009-155719 A (TK TECHNO CONSULTING KK) 16 July 2009 (2009-07-16), claims | 1-12 |
| A | JP 2010-90472 A (TK TECHNO CONSULTING KK) 22 April 2010 (2010-04-22), claims | 1-12 |
| A | JP 2000-501778 A (ULLAKKO, K. M.) 15 February 2000 (2000-02-15), claims, table 1 | 1-12 |

☐ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 July 2021 | 20 July 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

42

| | | International application No. |
|---|---|---|
| | | PCT/JP2021/016266 |

| JP 2015-150586 A | 24 August 2015 | (Family: none) |
|---|---|---|
| JP 2004-218060 A | 05 August 2004 | (Family: none) |
| JP 2009-155719 A | 16 July 2009 | (Family: none) |
| JP 2010-90472 A | 22 April 2010 | (Family: none) |
| JP 2000-501778 A | 15 February 2000 | WO 1997/003215 A1<br>claims, table 1 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014129567 A
- JP 2015150586 A

### Non-patent literature cited in the description

- **T. SAWAGUCHI et al.** Designing Fe-Mn-Si alloys with improved low-cycle fatigue lives. *Scripta Mater,* 2015, vol. 99 (0), 49-52
- **D. T. PIERCE ; J.A. JIMENEZ ; J. BENTLEY ; D. RAABE ; C. OSKAY ; J.E. WITTIG.** The influence of manganese content on the stacking fault and austenite/epsilon-martensite interfacial energies in Fe-Mn-(Al-Si) steels investigated by experiment and theory. *Acta Mater,* 2014, vol. 68 (15), 238-253
- **S. CURTZE ; V.T. KUOKKALA ; A. OIKARI ; J. TALONEN ; H. HANNINEN.** Thermodynamic modeling of the stacking fault energy of austenitic steels. *Acta Mater,* 2011, vol. 59 (3), 1068-1076
- **S. ALLAIN ; J.P. CHATEAU ; O. BOUAZIZ ; S. MIGOT ; N. GUELTON.** Correlations between the calculated stacking fault energy and the plasticity mechanisms in Fe-Mn-C alloys. *Materi Sci Eng A,* 2004, vol. 387, 158-162
- **O. GRASSEL ; G. FROMMEYER.** Effect of martensitic phase transformation and deformation twinning on mechanical properties of Fe-Mn-Si-Al steels. *Mater Sci Technol,* 1998, vol. 14 (12), 1213-1217
- **A.T. DINSDALE.** Sgte Data for Pure Elements. *Calphad,* 1991, vol. 15 (4), 317-425
- **A. DUMAY ; J.P. CHATEAU ; S. ALLAIN ; S. MIGOT ; O. BOUAZIZ.** Influence of addition elements on the stacking-fault energy and mechanical properties of an austenitic Fe-Mn-C steel. *Mater Sci Eng A,* 2008, vol. 483-84, 184-187
- **W.M. HUANG.** An Assessment of the Fe-Mn System. *Calphad,* 1989, vol. 13 (3), 243-252
- **J. NAKANO ; P.J. JACQUES.** Effects of the thermodynamic parameters of the hcp phase on the stacking fault energy calculations in the Fe-Mn and Fe-Mn-C systems. *Calphad,* 2010, vol. 34 (2), 167-175
- **J. LACAZE ; B. SUNDMAN.** An assessment of the Fe-C-Si system. *MTA,* 1991, vol. 22 (10), 2211-2223
- **S. COTES ; A.F. GUILLERMET ; M. SADE.** Phase stability and fcc/hcp martensitic transformation in Fe-Mn-Si alloys: Part II. Thermodynamic modelling of the driving forces and the M-s and A(s) temperatures. *J Alloy Compd,* 1998, vol. 280 (1-2), 168-177
- **A. FORSBERG ; J. ÅGREN.** Thermodynamic evaluation of the Fe-Mn-Si system and the γ/ε martensitic transformation. *J Phase Equil,* 1993, vol. 14 (3), 354-363
- **I.A. YAKUBTSOV ; A. ARIAPOUR ; D.D. PEROVIC.** Effect of nitrogen on stacking fault energy of f.c.c. iron-based alloys. *Acta Mater,* 1999, vol. 47 (4), 1271-1279
- **J.-O. ANDERSSON ; B. SUNDMAN.** Thermodynamic properties of the Cr-Fe system. *Calphad,* 1987, vol. 11 (1), 83-92
- **K. FRISK.** A thermodynamic evaluation of the Cr-Fe-N system. *MTA,* 1990, vol. 21 (9), 2477-2488
- **W.S. YANG ; C.M. WAN.** The Influence of Aluminum Content to the Stacking-Fault Energy in Fe-Mn-Al-C Alloy System. *J Mater Sci,* 1990, vol. 25 (3), 1821-1823
- **L. LI ; T.Y. HSU.** Gibbs free energy evaluation of the fcc(gamma) and hcp(epsilon) phases in Fe-Mn-Si alloys. *Calphad,* 1997, vol. 21 (3), 443-448